# EUROPÄISCHE PATENTSCHRIFT

(11) **EP 4 336 056 B1**
(45) Veröffentlichungstag und Bekanntmachung des Hinweises auf die Patenterteilung: **30.10.2024**
(21) Anmeldenummer: 23190928.4
(22) Anmeldetag: 10.08.2023
(51) Int. Cl.: F16B 13/12, F16B 13/14

(54) **DÜBEL MIT UMFÄNGLICH BÜNDIG ANEINANDER ANLIEGENDEN, GETRENNTEN SPREIZSTEGEN UND DARIN ENTHALTENEM KLEBSTOFF**
DOWEL WITH PERIPHERALLY ABUTTING SEPARATE EXPANDING BARS AND ADHESIVE CONTAINED THEREIN
CHEVILLE AVEC NERVURES D'ÉCARTEMENT SÉPARÉES ADJACENTES CIRCONFÉRENTIELLEMENT AFFLEURANTES ET ADHÉSIF CONTENU DANS CELLE-CI

(30) Priorität: 06.09.2022 DE 102022122613
(43) Veröffentlichungstag der Anmeldung: 13.03.2024
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE); Gerisch, Thomas, 71672 Marbach (DE); Pehl, Christian, 74585 Rot am See (DE)
(74) Vertreter: Dilg, Haeusler, Schindelmann Patentanwaltsgesellschaft mbH

(56) Entgegenhaltungen:
- WO-A1-2008/010050
- DE-C1- 4 107 790
- DE-U1- 202019 005 323

## Beschreibung

Die Erfindung betrifft einen Dübel, eine Dübelanordnung und ein Verfahren zum Setzen eines Dübels in ein Setzloch eines Verankerungsgrunds.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

Alternativ können chemische Dübel eingesetzt werden. Chemische Dübel weisen in der Regel mehreren Komponenten auf und erhalten ihre Festigkeit im Mauerwerk durch die Reaktion von Harzen und verschiedenen Chemikalien. Chemische Befestigungen können als lose Befestigungselemente mit Klebstoff in einem Bohrloch eingesetzt werden. Die Befestigung kann deshalb immer erst nach der Aushärtezeit verwendet werden. Der Klebstoff wird herkömmlich über aufwendige Injektionssysteme in das Bohrloch eingebracht oder mittels Glaskörper oder Folienbeutel eingesteckt. Die vorgefertigten Glashülsen oder Folienbeutel stellen immer einen Fremdkörper im Bohrloch dar, welche die vollständige Benetzung des Bohrloches mit Kleber verhindert.

Wenngleich herkömmliche Dübel für verschiedene Anwendungen sehr leistungsstark sind, kann es in einigen Fällen zu einer unzureichenden Verankerungskraft kommen.

Es sind außerdem aus DE 20 2019 005 323, DE 10 2010 016 932,

DE 10 2006 060 537 , EP 3604831, DE 10 2007 043 568 und WO 2008/010050 A1 Dübel bekannt, die mit Klebstoff oder dergleichen bestückt sind.

Es ist eine Aufgabe der vorliegenden Erfindung, einen Dübel bereitzustellen, der in einen Untergrund einfach, schnell, zuverlässig und mit einer hohen Verankerungskraft gesetzt werden kann.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Dübel geschaffen, der einen Fuß mit einer Öffnung zum Einführen eines Befestigungselements (insbesondere einer Schraube oder eines Bolzens), einen Kopf und einen Spreizbereich (insbesondere einen Bereich des Dübels, der bei Einbringen eines Befestigungselements eine Aufspreizung erfährt) zwischen dem Fuß und dem Kopf mit einer Mehrzahl von in Umfangsrichtung bündig aneinander anliegenden (insbesondere abstandsfrei oder ohne Zwischenraum aneinander anliegenden und einander daher berührenden), aber getrennten (insbesondere ohne feste Verbindung an einer Berührfläche und somit als separate Körper ausgebildeten) Spreizstegen (insbesondere langgestreckte Körper oder Materialabschnitte, die bei Einführen eines Befestigungselements in die Öffnung des Dübels eine seitliche Spreizbewegung vollführen können) und Klebstoff (insbesondere ein einkomponentiger oder mehrkomponentiger Prozesswerkstoff, der durch Oberflächenhaftung und seine innere Festigkeit Verankerungsgrund, Dübel und/oder Befestigungselement mittels Klebens miteinander verbinden kann) im Inneren des Dübels aufweist, der bei Einführen des Befestigungselements und daraus resultierendem Aufspreizen der Spreizstege durch dadurch entstehende Zwischenräume zwischen den getrennten Spreizstegen aus dem Dübel austritt.

Gemäß einem anderen Ausführungsbeispiel der vorliegenden Erfindung ist eine Dübelanordnung bereitgestellt, aufweisend einen Dübel mit den oben beschriebenen Merkmalen und ein Befestigungselement zum Einführen in oder eingeführt in die Öffnung des Dübels derart, dass der Klebstoff im Inneren des Dübels bei Einführen des Befestigungselements und daraus resultierendem Aufspreizen der Spreizstege durch dadurch entstehende Zwischenräume zwischen den getrennten Spreizstegen aus dem Dübel austritt.

Gemäß noch einem anderen Ausführungsbeispiel der vorliegenden Erfindung ist ein Verfahren zum Setzen eines Dübels mit den oben beschriebenen Merkmalen in ein Setzloch in einem Verankerungsgrund bereitgestellt, wobei das Verfahren ein Setzen des Dübels in das Setzloch, ein Einführen eines Befestigungselements in die Öffnung des Dübels, ein Aufspreizen der Spreizstege infolge des Einführens, und ein Austreten zumindest eines Teils des Klebstoffs aus dem Inneren des Dübels infolge des Einführens und durch infolge des Aufspreizens zwischen den getrennten Spreizstegen entstehende Zwischenräume aufweist.

Gemäß einem exemplarischen Ausführungsbeispiel der Erfindung ist ein Dübel geschaffen, bei dem voneinander separat ausgebildete Spreizstege in Umfangsrichtung direkt und ohne Zwischenraum aneinander anliegen. Aneinander unmittelbar angrenzende Spreizstege eines solchen Dübels können somit mechanisch unverbunden sein, aber aneinander anstoßen oder unmittelbar angrenzen. Auf diese Weise ist es einerseits möglich, dass jeder der Spreizstege jeweils unabhängig von anderen Spreizstegen bei Einführen eines Befestigungselements in die Öffnung des Dübels aufspreizen kann und dadurch zu einer festen Verankerung des Dübels in einem Bohrloch oder dergleichen in dem Untergrund beitragen kann. Durch das einander berührende Anordnen der Spreizstege ohne Zwischenräume in einem Zustand des Dübels vor Einbringen des Befestigungselements ist sichergestellt, dass der Dübel in Umfangsrichtung zwischen einander benachbarten Spreizelementen keine nennenswerten Zwischenräume ohne Befestigungswirkung aufweist. Auf diese Weise sind eine besonders sichere Verankerung des Dübels in einem Aufnahmeloch des Untergrunds und eine hohe Auszugskraft sichergestellt. Vorteilhaft können die bündig aneinander anliegenden, aber getrennten Spreizstege eine geschlossene Dübelhülse bilden, die ganz oder teilweise mit flüssigem oder viskosem Klebstoff gefüllt sein kann. Solange die Spreizstege nicht aufgespreizt sind, weil noch kein Befestigungselement in die Öffnung des Dübels eingebracht worden ist, können die bündig aneinander anliegenden Spreizstege als klebstoffdichter Behälter fungieren, der sowohl ein Aushärten als auch ein Austreten des Klebstoffs aus dem Dübel hemmt oder sogar verunmöglicht. Durch Einbringen des Befestigungselements (zum Beispiel einer Schraube) in die Öffnung des Dübels dringt das Befestigungselement in das Reservoir aus Klebstoff im Dübelinneren ein, verdrängt Klebstoff und wirkt spreizend auf die Spreizstege ein. Dadurch spreizen die Spreizstege auf, wodurch zwischen benachbarten Spreizstegen mantelseitige Zwischenräume entstehen. Da das eingedrungene Befestigungselement einen Druck auf den Klebstoff ausübt, wird der Klebstoff durch die Zwischenräume zumindest auch mantelseitig ins Dübeläußere gepresst, wodurch ein Zwischenraum zwischen einem Setzloch in einem Verankerungsgrund und dem Dübeläußeren ganz oder teilweise mit Klebstoff gefüllt wird. Da dieser nun in Wirkverbindung mit Umgebungsluft gelangt, kann der Klebstoff aushärten und sich verfestigen. Dadurch wird eine Klebeverbindung zwischen Befestigungselement, Dübel und Verankerungsgrund ausgebildet. Gleichzeitig bewirken die simultan aufspreizenden Spreizstege eine mechanische Spreizbefestigung des Dübels im Verankerungsgrund. Der Dübel und das Befestigungselement werden im Verankerungsgrund also gleichzeitig chemisch und mechanisch fixiert. Alles, was ein Benutzer hierfür zu tun hat, ist das Setzen des Dübels im Setzloch und das nachfolgende Einbringen (insbesondere Eindrehen) des vorzugsweise als Schraube ausgebildeten Befestigungselements in die Öffnung des Dübels. Das Setzen des Dübels ist also einfach und fehlerrobust. Besonders vorteilhaft ist, dass der Dübel mit seinen anfänglich und in einer Lagerphase bündig aneinander anliegenden Spreizstegen selbst als dichter Behälter für den Klebstoff fungiert, sodass ein zusätzlicher Behälter (wie zum Beispiel ein Beutel) für den Klebstoff im Inneren des Dübels gemäß einem exemplarischen Ausführungsbeispiel entbehrlich sein kann. Dies vereinfacht den Aufbau des Dübels und verbessert die Freisetzungseigenschaften des Klebstoffs im Setzloch, da ein Klebstoffbehälter im Inneren eines Dübels das freie Austreten des Klebstoffs ins Setzloch behindern könnte. Besonders vorteilhaft ist, dass durch das Aufspreizen der Spreizstege sehr schnell eine mechanische Befestigungswirkung eintritt. Das Aushärten des Klebstoffs dauert in der Regel etwas länger, führt dann aber zu einer erhöhten Befestigungskraft. Durch einen Dübel gemäß einem exemplarischen Ausführungsbeispiel der Erfindung wird somit - anders als bei herkömmlichen chemischen Dübeln - sofort eine Befestigungskraft bereitgestellt, die nach der Aushärtezeit des Klebstoffs - anders als bei herkömmlichen mechanischen Dübeln - durch die hohe Befestigungskraft einer Klebeverbindung weiter gestärkt wird. Ein Dübel gemäß einem exemplarischen Ausführungsbeispiel erlaubt also bereits unmittelbar nach dem Setzen eine erhebliche mechanische Belastung, sodass nicht erst auf das Aushärten des Klebstoffs gewartet werden muss, bevor eine Montageaufgabe vollendet werden kann. Ein Dübel, insbesondere Kunststoffdübel, kann gemäß einem exemplarischen Ausführungsbeispiel der Erfindung einen Teil der Befestigung bilden und gleichzeitig die Verpackung des Klebers darstellen.

Im Weiteren werden zusätzliche Ausführungsbeispiele des Dübels, der Dübelanordnung und des Verfahrens beschrieben.

Gemäß einem Ausführungsbeispiel kann ein erster Teil der Spreizstege Teil einer ersten Spritzgusskomponente des Dübels sein und kann ein zweiter Teil der Spreizstege Teil einer zweiten Spritzgusskomponente des Dübels sein. Auf diese Weise kann der Dübel einfach und kostengünstig mittels Spritzgießens hergestellt werden. Darüber hinaus erlaubt die Kombination des Dübels aus zwei (oder mehr) Spritzgusskomponenten die Bereitstellung von Spreizstegen unterschiedlicher Eigenschaften, beispielsweise unterschiedlicher Materialien. Auf diese Weise können die Spreizfunktion des Dübels und seine Klebstofffreigabeeigenschaften verfeinert eingestellt werden.

Gemäß einem Ausführungsbeispiel können die erste Spritzgusskomponente und die zweite Spritzgusskomponente aus denselben Materialien hergestellt sein. Besonders bei Bilden der beiden Spritzgusskomponenten aus demselben Kunststoffmaterial kann es bei entsprechender Prozessführung ermöglicht sein, die bündig aneinander liegenden Spreizstege aneinander anhaftend auszubilden. Dies erlaubt es, die Dichtigkeit des Klebstoffbehälters, der durch die bündig aneinander anliegenden Spreizstege ermöglicht wird, weiter zu verbessern.

Gemäß einem alternativen Ausführungsbeispiel können die erste Spritzgusskomponente und die zweite Spritzgusskomponente aus unterschiedlichen Materialien hergestellt sein. Dann können mit direktem physischen Kontakt bündig aneinander liegende Spreizstege aus unterschiedlichen Kunststoffmaterialien gebildet werden. Dies erlaubt eine Feineinstellung der Spreizeigenschaften und der Charakteristik, mit der bei Einführen eines Befestigungselements in die Öffnung des Dübels der Klebstoff freigegeben wird.

Gemäß einem Ausführungsbeispiel können zwischen der ersten Spritzgusskomponente und der zweiten Spritzgusskomponente umfangsseitig zwischen den Spreizstegen und/oder kopfseitig Komponentenübergänge gebildet sein, die bei Einführen des Befestigungselements Zwischenräume zum Austreten des Klebstoffs bilden. Durch das Einführen des Befestigungselements in die Öffnung des Dübels kann es in Umfangsrichtung des Dübels zu einem radialen Aufspreizen der zuvor bündig aneinander anliegenden Spreizstege und somit zu einer räumlichen Trennung der Spreizstege voneinander kommen, sodass zwischen benachbarten Spreizstegen auch Komponentenübergänge zwischen den beiden Spritzgusskomponenten gebildet werden können. An den Komponentenübergängen entstehende Zwischenräume dienen zum Hindurchtreten von Klebstoff aus dem Dübelinneren ins Dübeläußere. Um den Klebstofffluss ins Dübeläußere beim Setzen weiter zu unterstützen, ist es möglich, auch im Bereich des Kopfs des Dübels, insbesondere an einer Stirnfläche des Dübels, Komponentenübergänge zwischen den Spritzgusskomponenten zu generieren. Solche Komponentenübergänge am Dübelkopf können bei Einbringen des Befestigungselements in die Dübelöffnung und durch eine daraus resultierende Presskraft des Klebstoffs und/oder des Befestigungselements selbst zu einem Bilden von Zwischenräumen am Dübelkopf führen, durch die hindurch Klebstoff aus dem Dübelinneren ins Dübeläußere fließen kann.

Gemäß einem Ausführungsbeispiel können die in Umfangsrichtung bündig aneinander anliegenden, aber getrennten Spreizstege aneinander klebstoffundurchlässig und/oder luftundurchlässig anliegen. Dadurch können vor dem Setzen die bündig aneinander liegenden Spreizstege selbst als Behälter für den Klebstoff dienen. Ihre Klebstoffundurchlässigkeit verunmöglicht vor dem Setzen ein Austreten des Klebstoffs aus dem Dübelinneren. Ihre Luftundurchlässigkeit verhindert vor dem Setzen ein unerwünschtes Aushärten des Klebstoffs, zum Beispiel durch Luftfeuchtigkeit oder anderes Umgebungsmedium.

Gemäß einem Ausführungsbeispiel können die in Umfangsrichtung bündig aneinander anliegenden, aber getrennten Spreizstege nicht miteinander stoffschlüssig verbunden sein. Ungeachtet ihres bündigen Aneinanderliegens mit direktem physischen Kontakt zum Bilden eines dichten Klebstoffbehälters vor dem Setzen können die benachbarten Spreizstege dort, wo sie beim Setzen des Dübels samt Befestigungselement Zwischenräume zum Hindurchtreten des Klebstoffs bilden, von einer stoffschlüssigen Verbindung miteinander frei sein. Dies ermöglicht ein kraftarmes Aufspreizen der Spreizstege beim Einbringen des Befestigungselements in die Dübelöffnung und erlaubt ein ungehindertes Durchtreten des Klebstoffs nach dem Spreizen. Stoffschlüssige Verbindungshäute zwischen benachbarten Spreizstegen können gemäß dem beschriebenen Ausführungsbeispiel vermieden sein.

Gemäß einem anderen Ausführungsbeispiel können die in Umfangsrichtung bündig aneinander anliegenden, aber getrennten Spreizstege aneinander integral anhaften. Benachbarte Spreizstege können somit vor dem Aufspreizen mit einer Haftkraft aneinander anliegen, die überwunden werden muss, bevor sich Zwischenräume zwischen benachbarten Spreizstegen zum Hindurchtreten von Klebstoff öffnen. Zwar wird bei einem solchen Ausführungsbeispiel die Trennung benachbarter Spreizstege beibehalten, sodass benachbarte Spreizstege physisch und funktional weiter voneinander unterschieden werden können, allerdings kann es zu einer Haftverbindung zwischen getrennten Spreizstegen kommen.

Gemäß einem Ausführungsbeispiel kann der Dübel ein den Klebstoff im Inneren des Dübels außenseitig verschließendes Verschlussmittel, zum Beispiel einen Stopfen, aufweisen. Ein solcher Stopfen oder Pfropfen kann ein (zum Beispiel topfförmiger oder scheibenförmiger) Einsatz sein, der dichtend in eine Dübelhülse eingesetzt sein kann, um den Klebstoff im Dübelinneren vor einem Austreten durch die Öffnung am Dübelfuß zu hindern. Der den Klebstoff außenseitig verschließende Stopfen kann klebstoffundurchlässig und/oder luftundurchlässig sein. Dadurch kann der Stopfen gemeinsam mit den Spreizstegen und dem (insbesondere jedenfalls vor dem Setzen) geschlossenen Dübelkopf das Reservoir von Klebstoff im Dübelinneren begrenzen und vor einem Austreten schützen. Der Stopfen kann insbesondere einen Bereich lokal verringerter Dicke aufweisen, der beim Einführen des Befestigungselements in die Öffnung des Dübels von einer Spitze des Befestigungselements (zum Beispiel von einer Schraubenspitze) durchdrungen wird. Dadurch wird eine einfache und zuverlässige Klebstofffreisetzung beim Einbringen des Befestigungselements in die Dübelöffnung gefördert.

Es ist auch möglich, im Inneren des Dübels zwei oder mehr Stopfen vorzusehen, um unterschiedliche Klebstoffkomponenten (zum Beispiel bei Vorsehen eines Zweikomponentenklebers) mittels eines jeweiligen Stopfens vor der Verarbeitung voneinander zu trennen. Beim Setzen des Befestigungselements in den Dübel können dann die mehreren Stopfen von dem Befestigungselement durchdrungen werden, wodurch es zur Mischung der mehreren Klebstoffkomponenten und zum vorzugsweise mantelflächenseitigen Austreten des Klebstoffs aus dem Dübel kommt.

Gemäß einem Ausführungsbeispiel kann der Klebstoff unmittelbar (d.h. mit direktem physischen Kontakt und ohne ein dazwischen liegendes Element) an zumindest einem Teil der Spreizstege anliegen. Mit anderen Worten kann der Dübel von einem separaten Klebstoffbehälter (insbesondere Klebstoffbeutel) frei sein. Stattdessen kann das Klebstoffreservoir im Dübelinneren mittels der Spreizstege, des Dübelkopfs und des Stopfens dichtend begrenzt sein. Vorteilhaft führt dies zu einem besonders effizienten Freigeben des Klebstoffs beim Einführen des Befestigungselements in die Dübelöffnung, da durch das Befestigungselement ein Aufspreizen der Spreizstege bewirkt wird, der ohne die Notwendigkeit eines Zerstörens eines separaten Klebstoffbehälters selbsttätig zur Klebstofffreigabe führt. Ein zusätzlicher Fremdkörper im Dübelinneren, der die Klebstoffverteilung hemmt, kann dadurch mit Vorteil vermieden werden.

In einem alternativen Ausführungsbeispiel kann im Inneren des Dübels ein separater Klebstoffbehälter (insbesondere Klebstoffbeutel) vorgesehen sein, der vor dem Setzen den Klebstoff von den Spreizstegen trennt. Dies kommt insbesondere dann in Betracht, wenn ein Klebstoff zum Einsatz kommt, der besonders sensibel auf Aushärtung bei Kontakt mit Umgebungsatmosphäre ist und/oder besonders niederviskos ist und daher ohne separaten Klebstoffbehälter aus dem Dübelinneren entweichen könnte.

Gemäß einem Ausführungsbeispiel kann der Dübel zumindest im Bereich des Klebstoffs in Umfangsrichtung und kopfseitig geschlossen sein. Somit kann der Dübel selbst einen dübelintegralen Klebstoffbehälter bilden. Ein solcher dübelintegraler Klebstoffbehälter kann durch die Spreizstege, den Dübelkopf und einen Stopfen begrenzt und gebildet sein.

Gemäß einem Ausführungsbeispiel kann der Klebstoff ein Einkomponenten-Klebstoff sein. Ein solcher Einkomponenten-Klebstoff kann insbesondere durch bloßes Austreten aus dem Dübelinneren aushärten, ohne dass es einer Mischung mit einer weiteren Klebstoffkomponente bedarf. Das Vorsehen eines Einkomponenten-Klebstoffs gestaltet das Unterbringen des Klebstoffs im Inneren des Dübels besonders einfach, da dann nur diese eine Klebstoffkomponente im Dübelinneren unterzubringen ist. Beispielsweise kann es sich bei einem Einkomponenten-Klebstoff um einen durch Luftfeuchtigkeit aushärtenden Klebstoff handeln.

Alternativ kann der Klebstoff ein Mehrkomponenten-Klebstoff sein, zum Beispiel ein Zweikomponenten-Klebstoff. Beispielsweise können die beiden Klebstoffkomponenten dann in unterschiedlichen Kammern im Inneren des Dübels untergebracht und voneinander (beispielsweise mittels eines weiteren Stopfens) getrennt sein, bis durch Einbringen des Befestigungselements in die Dübelöffnung die Klebstoffkomponenten miteinander in Wirkverbindung gebracht werden.

Gemäß einem Ausführungsbeispiel kann in dem Spreizbereich die Mehrzahl von Spreizstegen so ausgebildet sein, dass bei Einführen des Befestigungselements insbesondere in Axialrichtung und/oder am Kopf längliche Zwischenräume, insbesondere zwischen den getrennten Spreizstegen, gebildet werden. Solche länglichen Zwischenräume an der Mantelfläche des Dübels zwischen den Spreizstegen bzw. an der Stirnfläche des Dübelkopfs erhöhen anschaulich die Durchtrittslänge des Klebstoffs aus dem Dübelinneren ins Dübeläußere. Dadurch wird die Festigkeit des chemischen Anteils der Dübelverbindung gestärkt.

Gemäß einem Ausführungsbeispiel kann die Dübelanordnung einen Verankerungsgrund (zum Beispiel eine Mauerwerkswand) mit einem Setzloch (zum Beispiel einem Bohrloch) aufweisen, in das der Dübel mit darin eingeführtem Befestigungselement so eingeführt ist, dass zumindest ein Teil des Klebstoffs befestigend zwischen einer Außenwand des Dübels und einer das Setzloch begrenzenden Wandung angeordnet ist. Im Rahmen dieser Anmeldung kann unter dem Begriff "Verankerungsgrund" insbesondere ein zum Verankern des Dübels und des Befestigungselements geeigneter Körper verstanden werden. Ein solcher Verankerungsgrund kann insbesondere eine Wand, weiter insbesondere eine vertikale Wand, sein. Materialien für einen solchen Verankerungsgrund sind insbesondere Holz oder Holzbaustoffe, oder aber auch Beton- und Mauerwerksbaustoffe, Metall, Gipskarton oder Kunststoffbauteile. Ferner kann ein solcher Verankerungsgrund auch ein beliebiger Kompositwerkstoff aus mehreren unterschiedlichen Materialkomponenten sein. Insbesondere kann ein Verankerungsgrund als Vollkörper oder als Hohlkörper ausgebildet sein. Im Rahmen dieser Anmeldung kann unter dem Begriff "Vollkörper" insbesondere ein Verankerungsgrund verstanden werden, der - von einer Aufnahmeöffnung (zum Beispiel ein Bohrloch) zum Aufnehmen des Dübels abgesehen - von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Untergrunds sein. Im Rahmen dieser Anmeldung kann unter dem Begriff "Hohlkörper" insbesondere ein Verankerungsgrund verstanden werden, der im Inneren (insbesondere in einem Eindringbereich des Dübels und des Befestigungselements in den Verankerungsgrund) - zusätzlich zu einer Aufnahmeöffnung (zum Beispiel ein Bohrloch) zum Aufnehmen des Dübels - Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Hochlochziegelsteine oder poriger Leichtbeton. Auch eine Platte (zum Beispiel eine Gipsplatte), hinter der ein Hohlraum angeordnet ist, kann einen solchen Hohlkörper bilden.

Gemäß einem Ausführungsbeispiel kann zumindest ein Teil der aufgespreizten Spreizstege befestigend gegen die das Setzloch begrenzende Wandung drücken. Folglich können die aufgespreizten Spreizstege im gesetzten Zustand des Dübels eine mechanische Befestigungsfunktion bewerkstelligen, die unmittelbar nach dem Setzvorgang wirksam ist. Darüber hinaus können die aufgespreizten Spreizstege zwischen sich Durchgänge bilden, die in Zusammenwirkung mit der klebstoffverdrängenden Funktion des Befestigungselements selbsttätig zum Austreten von Klebstoff aus dem Dübel in einen Zwischenraum zwischen dem Verankerungsgrund und dem Dübeläußeren führen. Dadurch wird synergistisch eine chemische Dübelfunktion bereitgestellt, die nach Aushärten des Klebstoffs zu einer signifikanten Erhöhung der Befestigungskraft führen kann.

Gemäß einem Ausführungsbeispiel kann der Verankerungsgrund mindestens eine Hohlkammer aufweisen, in der ein Teil des Klebstoffs angeordnet sein. Ist der Verankerungsgrund also als Hohlkörper ausgebildet, kann Klebstoff auch in Hohlkammern des Hohlkörpers fließen und an diesen Stellen, an denen eine mechanische Befestigung geschwächt sein kann, die Befestigungskraft maßgeblich erhöhen.

Gemäß einem Ausführungsbeispiel kann das Verfahren infolge des Austretens ein klebendes Befestigen zwischen dem Dübel und einer das Setzloch begrenzenden Wandung des Verankerungsgrunds sowie infolge des Aufspreizens der Spreizstege gegen die das Setzloch begrenzende Wandung ein mechanisches Befestigen des Dübels im Verankerungsgrund aufweisen. All dies kann allein dadurch erreicht werden, dass der Benutzer lediglich den Dübel in das Setzloch setzt und nachfolgend das Befestigungselement so weit in den Dübel eintreibt oder eindreht, bis es zum Aufspreizen der Spreizstege und zum Hindurchpressen des Klebstoffs durch Zwischenräume zwischen den Spreizstegen kommt.

Gemäß einem Ausführungsbeispiel können die Spreizstege erste Spreizstege und zweite Spreizstege aufweisen. Die ersten Spreizstege können am Fuß und/oder am Kopf des Dübels miteinander verbunden sein. Alternativ oder ergänzend können die zweiten Spreizstege am Fuß und/oder am Kopf des Dübels miteinander verbunden sein. Durch das Verbinden der Gruppe der ersten Spreizstege miteinander bzw. der Gruppe der zweiten Spreizstege miteinander - vorzugsweise am Kopf und am Fuß - kann ein mechanisch besonders stabiler Dübel geschaffen werden, der auch im aufgespreizten Zustand mechanisch intakt bleibt. Die gruppenweise Verbindung der ersten Spreizstege bzw. der zweiten Spreizstege am Kopf bzw. Fuß des Dübels kann zum Beispiel stoffschlüssig erfolgen, indem die genannten Strukturen integral ausgebildet werden (zum Beispiel mittels Spritzgießens). Auch eine chemische Verbindung der jeweiligen Gruppe von Spreizstegen am Kopf und/oder Fuß ist möglich. Alternativ oder ergänzend können die Spreizstege der jeweiligen Gruppe am Kopf und/oder Fuß auch mittels einer mechanischen Verzahnung unter Ausbildung eines Formschlusses miteinander verbunden werden. Dies trägt zur Klebstoffdichtigkeit bei, ohne ein Durchtreten von Klebstoff nach Aufspreizen der Spreizstege nennenswert zu hemmen.

Gemäß einem Ausführungsbeispiel können die ersten Spreizstege nicht (insbesondere nicht direkt bzw. nicht unmittelbar) mit den zweiten Spreizstegen verbunden sein. Anders ausgedrückt können die ersten Spreizstege im Verhältnis zu den zweiten Spreizstegen unverbunden sein. Dies ermöglicht es, die ersten Spreizstege und die zweiten Spreizstege funktional voneinander zu trennen und auch in unterschiedlicher Weise auszugestalten. Dies kann zum Beispiel dadurch erreicht werden, dass die ersten Spreizstege als Teil eines Rohlings (zum Beispiel einer ersten Spritzgusskomponente) geformt werden und nachfolgend verbleibende Leerräume unter Erzeugung der zweiten Spreizstege mit Material ausgefüllt werden (zum Beispiel unter Generierung einer zweiten Spritzgusskomponente) bzw. Teilbereiche des Rohlings überspitzt werden. Durch dieses zwei- (oder mehr-) stufige Herstellungsverfahren kann sowohl das zueinander bündige Anordnen der ersten und zweiten Spreizstege als auch das getrennte Ausbilden der ersten und zweiten Spreizstege erreicht werden.

Gemäß einem Ausführungsbeispiel können die ersten Spreizstege und die zweiten Spreizstege aus unterschiedlichen Materialien oder aus dem gleichen Material hergestellt sein. Wenn die ersten Spreizstege und die zweiten Spreizstege aus unterschiedlichen Materialien hergestellt sind, kann die jeweilige Materialwahl in Einklang mit der jeweiligen Funktion der ersten Spreizstege bzw. der zweiten Spreizstege erfolgen. Wenn die ersten Spreizstege und die zweiten Spreizstege aus demselben Material hergestellt sind, können gegebenenfalls unerwünschte Materialbrücken vermieden und etwaige Probleme mit unterschiedlichen Wärmeausdehnungskoeffizienten und dergleichen vermieden werden.

Gemäß einem Ausführungsbeispiel können die ersten Spreizstege und die zweiten Spreizstege in Umfangsrichtung alternierend angeordnet sein. Mit anderen Worten können sich in Umfangsrichtung jeweils ein erster Spreizsteg und ein zweiter Spreizsteg abwechseln. Dadurch ist eine sehr homogene Krafteinleitung und Klebstoffeinleitung von dem Dübel in den Untergrund ermöglicht.

Gemäß einem Ausführungsbeispiel können die ersten Spreizstege und die zweiten Spreizstege zueinander formschlüssig ausgebildet sein. Eine Außenfläche des Spreizbereichs kann dann vorzugsweise vollständig geschlossen bzw. lückenfrei sein. Insbesondere können Teile der ersten Spreizstege in Ausnehmungen einer Struktur eingepasst sein, die von den zweiten Spreizstegen und gegebenenfalls diese verbindenden Verbindungsstrukturen gebildet sind. Auf diese Weise ist ein leicht handhabbarer und kompakter Dübel mit universeller Einsetzbarkeit in unterschiedlichen Untergründen geschaffen. Ein solcher Dübel kann besonders vorteilhaft als Behälter für Klebstoff eingesetzt werden.

Gemäß einem Ausführungsbeispiel können die ersten Spreizstege und die zweiten Spreizstege miteinander verzahnt sein. Durch eine gegenseitige Verzahnung der als separate Körper ausgebildeten, aber miteinander in Berührkontakt stehenden ersten und zweiten Spreizstege kann sowohl die Kontaktfläche zwischen benachbarten Spreizstegen erhöht als auch eine formschlüssige Kopplung der einander berührenden Spreizstege ermöglicht werden. Zum Beispiel können Zahnstrukturen in Umfangsrichtung der ersten Spreizstege ausgebildet werden, die mit invers geformten Zahnstrukturen entlang von Seiten der zweiten Spreizstege in Eingriff sind.

Gemäß einem Ausführungsbeispiel kann zumindest ein Teil der Spreizstege in Axial- oder Setzrichtung des Dübels alternierend breitere Abschnitte und schmälere Abschnitte aufweisen. Die abwechselnd breiteren und schmäleren Abschnitte der Spreizstege können durch die oben beschriebenen Zahnstrukturen gebildet sein.

Gemäß einem Ausführungsbeispiel kann der Spreizbereich in Umfangsrichtung spaltfrei geschlossen sein. Anschaulich weist gemäß der beschriebenen Ausführungsform der Spreizbereich keine Schlitze zwischen Spreizstegen auf und ist daher (zumindest im Wesentlichen) vollumfänglich geschlossen. Gemäß einem solchen bevorzugten Ausführungsbeispiel kann der Dübel entlang seines gesamten Umfangs oder zumindest im Wesentlichen entlang seines gesamten Umfangs von Zwischenräumen frei sein, bevor das Befestigungselement in die Öffnung des Dübels eingeführt wird. Auf diese Weise ist es möglich, mittels der Spreizstege entlang des gesamten Umfangs des Dübels eine im Wesentlichen gleiche radial nach außen gerichtete Befestigungskraft auf einen Untergrund auszuüben, in den der Dübel samt Befestigungselement eingeführt ist. Wenn der gesamte (oder im Wesentlichen der gesamte) Umfang des Dübels mit Kunststoff gefüllt ist, kann durch Vermeiden größerer Luftlöcher zwischen benachbarten Spreizstegen auch ein unerwünschter Verlust an Haltekraft und Klebstoff vermieden werden.

Gemäß einem Ausführungsbeispiel können die Spreizstege ausgebildet sein, bei Einführen eines Befestigungselements in den, in einen als Vollkörper ausgebildeten Untergrund eingeführten Dübel gemeinsam aufzuspreizen. Wird also zum Beispiel eine Schraube in die Öffnung des Dübels eingedreht, der in ein Sackloch oder Durchgangsloch des Vollkörpers eingeführt ist, übt die Schraube (oder ein anderes Befestigungselement) eine radial nach außen gerichtete Kraft auf die in Umfangsrichtung spaltfrei einander berührend und aneinander angestückten Spreizstege aus und verspreizt diese gegen den Untergrund. Auf diese Weise ist eine sehr zuverlässige Verankerung von Dübel und Befestigungselement in dem Vollkörper sichergestellt, da in Umfangsrichtung im Wesentlichen durchgehend eine Übertragung einer radial nach außen gerichteten Befestigungskraft von dem Dübel auf den Untergrund erfolgt. Außerdem kann dadurch eine in Umfangsrichtung homogene Klebstoffverteilung sichergestellt werden.

Gemäß einem Ausführungsbeispiel des Dübels kann der Kopf vor Einbringen des Befestigungselements in den Dübel geschlossen sein. Anschaulich kann der Kopf als geschlossene Kappe ausgebildet sein, die im montierten Zustand des Dübels im Bohrlochtiefsten angeordnet sein kann. Auf diese Weise kann vermieden werden, dass Bohrmehl, Schmutz, etc. in die Öffnung des Dübels zum Aufnehmen des Befestigungselements eindringt und dass Klebstoff aus dem Inneren des Dübels unerwünscht austritt.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne. Eine solche Mitdrehsicherung verunmöglicht oder unterdrückt, dass sich der Dübel unerwünscht mitdreht, wenn ein zum Beispiel als Schraube ausgebildetes Befestigungselement in die Öffnung des Dübels eingedreht wird. Dadurch kann ein durch ein unerwünschtes Mitdrehen des Dübels beim Setzen des Befestigungselements einhergehender Verlust an Befestigungskraft des Dübels in dem Untergrund vermieden werden.

Gemäß einem Ausführungsbeispiel kann ein Einbringen des Dübels und nachfolgend des Befestigungselements in den Untergrund nach Bilden einer Vorbohrung in dem Untergrund erfolgen. Eine solche Vorbohrung in einem Untergrund, der als Vollkörper ausgebildet ist, kann ein Sackloch sein. In einem Untergrund, der als Hohlkörper ausgebildet ist, kann die Vorbohrung ein Durchgangsloch sein, das sich bis in mindestens einen ersten Hohlraum hinein erstreckt.

Im Folgenden werden exemplarische Ausführungsbeispiele der vorliegenden Erfindung mit Verweis auf die folgenden Figuren detailliert beschrieben.
Figur 1 zeigt eine Querschnittsansicht und Figur 2 zeigt eine dreidimensionale Ansicht eines Dübels gemäß einem exemplarischen Ausführungsbeispiel der Erfindung.
Figur 3 zeigt eine dreidimensionale Ansicht eines Dübels gemäß einem anderen exemplarischen Ausführungsbeispiel der Erfindung.
Figur 4 zeigt eine dreidimensionale Ansicht eines Dübels gemäß noch einem anderen exemplarischen Ausführungsbeispiel der Erfindung.
Figur 5 bis Figur 8 zeigen unterschiedliche Ansichten eines Dübels gemäß einem weiteren exemplarischen Ausführungsbeispiel der Erfindung.
Figur 9 bis Figur 11 zeigen unterschiedliche Ansichten eines Dübels gemäß einem weiteren exemplarischen Ausführungsbeispiel der Erfindung.
Figur 12 bis Figur 15 zeigen unterschiedliche Ansichten einer Dübelanordnung gemäß einem weiteren exemplarischen Ausführungsbeispiel der Erfindung.
Figur 16 zeigt eine dreidimensionale Ansicht eines Dübels gemäß einem exemplarischen Ausführungsbeispiel der Erfindung.
Figur 17 zeigt eine erste Spritzgusskomponente des Dübels gemäß Figur 16.
Figur 18 zeigt eine zweite Spritzgusskomponente des Dübels gemäß Figur 16.
Figur 19 zeigt eine Seitenansicht des Dübels gemäß Figur 16.
Figur 20 zeigt eine Schnittansicht des Dübels gemäß Figur 16 bis Figur 19 entlang einer in Figur 19 dargestellten Schnittebene A-A.
Figur 21 zeigt eine Schnittansicht des Dübels gemäß Figur 16 bis Figur 19 entlang einer in Figur 19 dargestellten Schnittebene B-B.
Figur 22 zeigt eine Schnittansicht des Dübels gemäß Figur 16 bis Figur 19 entlang einer in Figur 19 dargestellten Schnittebene C-C.
Figur 23 zeigt eine räumliche Ansicht in ein Inneres des Dübels gemäß Figur 16 bis Figur 22.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Kunststoffdübel sind einfach und günstig herzustellen und funktionieren über Spreizkräfte im Bohrloch, die durch eine Schraube über den Dübel in den Untergrund eingeleitet werden. Die Belastbarkeit des Dübels ist sofort gewährleistet.

Chemische Dübel funktionieren über die Adhäsion (insbesondere über einen Stoffschluss) vom Kleber zum Untergrund und auch über einen Formschluss, den das Bohrloch durch den Bohrvorgang oder einen Lochstein selbst aufweist. Die Tragfähigkeit von chemischen Dübeln kann gegenüber Kunststoffdübeln deutlich erhöht sein.

Die Tragfähigkeit von Kunststoffdübeln ist in Beton und Vollsteinen etwas geringer als die von chemischen Dübeln und kann in Lochsteinen sogar unzureichend sein. Hier haben die chemischen Befestigungen deutliche Vorteile. Allerdings sind insbesondere herkömmliche Zweikomponenten-Klebesysteme sehr aufwendig in der Applikation, da sie zum Beispiel ein Mischen, Auspressen, etc. erfordern können. Aber auch Einkomponenten-Klebesysteme müssen herkömmlich gesondert bereitgestellt werden. Die geforderten Aushärtezeiten von chemischen Dübeln (zum Beispiel 45 Minuten) unterbrechen herkömmlich den Arbeitsfortschritt bei der Durchführung der Montage, da die Befestigung während der Aushärtezeit nicht berührt werden darf.

Gemäß einem exemplarischen Ausführungsbeispiel kann eine Kombination eines mechanischen Dübelsystems mit einem chemischen Dübelsystem die genannten Vorteile verstärken und herkömmliche Nachteile reduzieren. Dies kann insbesondere dadurch erreicht werden, dass Klebstoff im Inneren eines Dübels untergebracht werden kann, für den der Dübel selbst einen Behälter bildet. Der Klebstoff tritt daher erst bei Einführen eines Befestigungselements in eine Dübelöffnung und einem daraus resultierenden Aufspreizen von zuvor bündig aneinander anliegenden, aber getrennten Spreizstegen des Dübels durch mittels des Spreizens entstehende Zwischenräume zwischen den nun voneinander beabstandeten Spreizstegen aus dem Dübel aus. Das Austreten des Klebstoffs erfolgt aufgrund einer den Klebstoff verdrängenden Presskraft des Befestigungselements, die dieses beim Einführen in die Dübelöffnung auf den Klebstoff ausüben kann.

Durch den kombinierten mechanischen und chemischen Dübel gemäß einem exemplarischen Ausführungsbeispiel der Erfindung ist es entbehrlich, die Aushärtezeit des Klebstoffs abzuwarten, bevor die Befestigung mechanisch belastet werden kann. Dies deshalb, weil die mechanische Befestigungsfunktion durch die aufgespreizten Spreizstege sofort nach dem Einführen des Befestigungselements in den Dübel wirksam wird. Durch die beschriebene Konfiguration, die auch zu einer kontrollierten, wohldosierten und etwas verzögerten Klebstofffreigabe führt, unterdrückt auch ein unerwünschtes Wegfließen des Klebstoffs von einer gewünschten Klebestelle. Anschaulich öffnet sich der Kunststoffdübel beim Setzen des Befestigungselements selbsttätig, um als nun geöffneter, dübelintegraler Klebstoffbehälter einen Klebstoffaustritt zu bewirken. Anschaulich kann eine in sich geschlossene Dübelhülse bereitgestellt werden, an der die Spreizstege anfänglich dicht an dicht aneinander angeschmiegt sind, ohne miteinander stoffschlüssig verbunden zu sein. Wird der Dübel aus zwei Spritzgusskomponenten gebildet, kann der Produktionsprozess gesteuert werden, um die Eigenschaften der Spreizstege zum Erreichen der beschriebenen Wirkungen gezielt einstellen zu können.

Gemäß einem exemplarischen Ausführungsbeispiel der Erfindung können Spreizstege eines Dübels mittels Zweikomponenten-Spritzguss hergestellt werden, sodass diese in Umfangsrichtung bündig aneinander anliegen, aber separate Körper bleiben. Hierbei kann zunächst eine erste Komponente in einem Spritzgusswerkzeug gespritzt werden und dann die zweite Komponente unter Verwendung eines zweiten, anderen Spritzgusswerkzeugeinsatzes hinzugefügt werden. Dadurch können getrennte erste und zweite Spreizstege bündig aneinander gefertigt werden. Diese dienen dann zum Bilden eines integralen Behälters im Dübelinneren, in dem der Klebstoff fließdicht aufgenommen sein kann.

Somit kann gemäß einem bevorzugten Ausführungsbeispiel der Erfindung ein aus zwei Spritzgusskomponenten aufgebauter Dübel geschaffen werden, der in Umfangsrichtung geschlossen ist, weil die Spreizschenkel des Dübels eng bzw. direkt aneinander anliegen. In den Dübel kann dann direkt, d.h. ohne Zwischenelement, ein Klebstoff eingebracht und mit einem Stopfen verschlossen werden. Wird ein Befestigungselement (insbesondere eine Schraube) in den Dübel und durch den Stopfen geführt (vorzugsweise geschraubt), spreizen die Spreizschenkel auf. Infolgedessen kann der Kleber nach außen und in den Raum zwischen Dübel und Bohrlochwandung treten. Es kann sogar möglich sein, dass der Klebstoff in den Stein und/oder in Hohlkammern des Steins hineinfließt. Dadurch wird eine besonders gute Haltekraft erzielt, da eine Befestigung durch Kleben und durch Formschluss erreicht wird. Hierbei hat es besondere Vorteile, die aneinander anliegenden Spreizschenkel oder Spreizstege zu verwenden, da es hierdurch bedingt im Umfang des Dübels zu keiner mechanischen Schwächung kommt. Dadurch liegt anschaulich mehr Material vor, das an die Bohrlochwand gedrückt wird. Dies führt wiederum zu mehr Formschluss und dadurch mehr Haltekraft. Ferner kann zuverlässig vermieden werden, dass der Klebstoffbehälter vor Gebrauch undicht wird, wodurch Umgebungsatmosphäre an den Klebstoff kommen und diesen zur Unzeit aushärten würde, so dass der Dübel nicht mehr verwendbar wäre.

Als Materialien für den Dübel eignen sich insbesondere spritzgussfähige Kunststoffe. Besonders geeignet sind Polyamid, Polypropylen, Polyethylen, Polyester und Acrylnitril-Butadien-Styrol-Copolymer (ABS) als Reinkunststoffe, sowie deren Blends. Ferner geeignet sind Polyvinylchlorid (PVC), Styrol-Butadien-Kautschuk (SBR), Ethylen-Propylen-Dien-Kautschuk (EPDM), Polymethylmethacrylat (PMMA), Polycarbonat (PC) und diverse Elastomere.

Der Klebstoff kann insbesondere (Meth-)Acrylate, Silikone, Polyvinylalkohol (PVA), Polyurethan (PUR), Epoxidharz, Synthese- und/oder Naturkautschuk (insbesondere lösemittelhaltig), Vinylether, Siloxane, Silane und/oder silanmodifizierte Polymere, Polychloropene, sowie ein Phenolharz aufweisen.

Besonders in Vollbaustoffen können sich bei einem nur geringeren Aufspreizen des Dübels Klebeflächen an der Bohrlochwandung ergeben, die vorteilhaft weiter erhöht werden können. Hierfür können zum Beispiel längliche Aussparungen an der Mantelfläche und/oder am Kopf des Dübels bewirken, dass eine größere Klebefläche entsteht, ohne dass die Funktion des Dübels nennenswert beeinträchtigt wird.

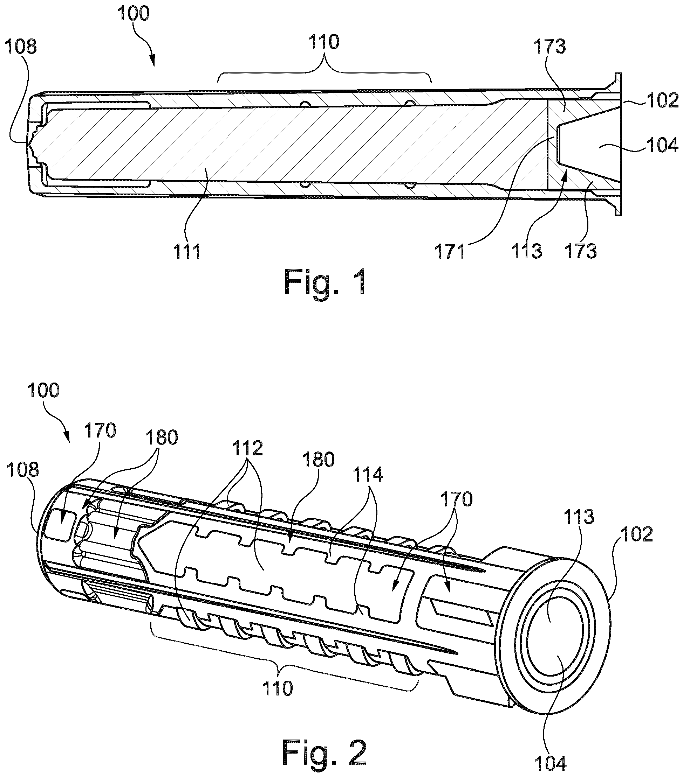

**Figur 1** zeigt eine Querschnittsansicht und **Figur 2** zeigt eine dreidimensionale Ansicht eines Dübels 100 gemäß einem exemplarischen Ausführungsbeispiel der Erfindung.

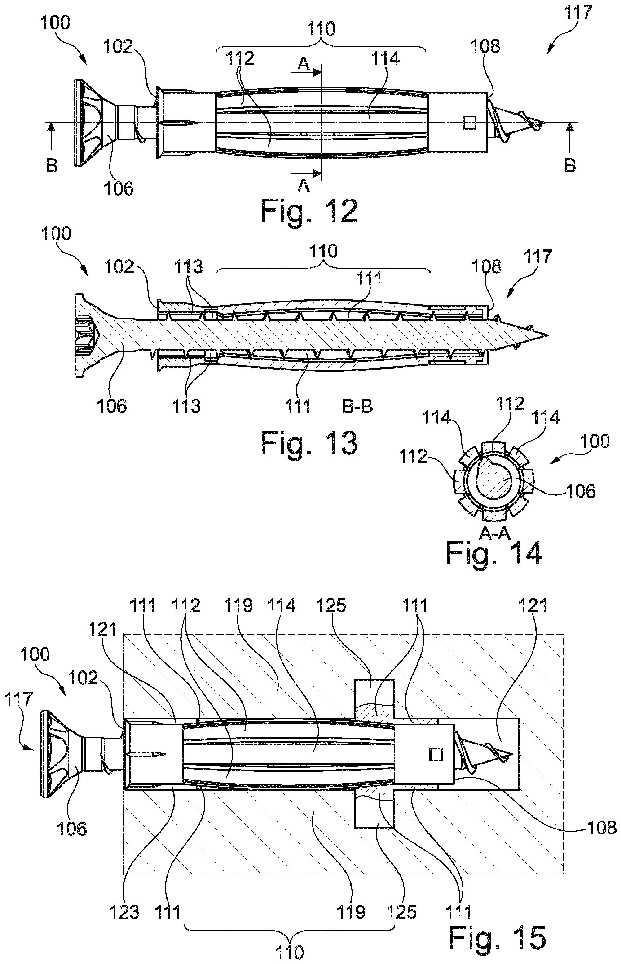

Der dargestellte Dübel 100 ist ein Kunststoffdübel und weist einen Fuß 102 mit einer Öffnung 104 zum Einführen eines in Figur 1 und Figur 2 nicht dargestellten Befestigungselements (siehe Bezugszeichen 106 in Figur 12 bis Figur 15). Das Befestigungselement kann eine Schraube sein, welche in die Öffnung 104 eingeführt wird. Darüber hinaus weist der Dübel 100 einen geschlossenen Kopf 108 auf. Ferner ist als Teil einer Mantelfläche des Dübels 100 ein Spreizbereich 110 zwischen dem Fuß 102 und dem Kopf 108 gebildet. Der Spreizbereich 110 enthält eine Vielzahl von in Umfangsrichtung bündig aneinander anliegenden, aber getrennten Spreizstegen 112, 114, die in Figur 2 erkennbar sind. Darüber hinaus ist, wie in Figur 1 dargestellt, nicht ausgehärteter Klebstoff 111 im Inneren des Dübels 100 vorgesehen, der erst bei Einführen des Befestigungselements 106 und daraus resultierendem Aufspreizen der Spreizstege 112, 114 durch dadurch entstehende Zwischenräume zwischen den getrennten Spreizstegen 112, 114 aus dem Dübel 100 austritt. Tritt ein Teil des Klebstoffs 111 aus dem Dübel 100 aus, verklebt dieser den Dübel 100 mit einem Verankerungsgrund (siehe Bezugszeichen 119 in Figur 15, zum Beispiel eine Betonwand), in den der Dübel 100 samt Befestigungselement 106 gesetzt ist. Ein anderer Teil des Klebstoffs 110 kann im Inneren des Dübels 100 verbleiben und dort den Dübel 100 auch mit dem Befestigungselement 106 verkleben. Durch den beschriebenen Mechanismus kann eine doppelte Befestigung erreicht werden, nämlich eine mechanische Spreizverbindung zwischen den mittels des Befestigungselements 106 gespreizten Spreizstegen 112, 114 und dem Verankerungsgrund 119 sowie eine Klebeverbindung zwischen dem Verankerungsgrund 119, dem Dübel 100 und dem Befestigungselement 106 vermittels des Klebstoffs 111 aus dem dübelinternen Klebstoffreservoir.

Vorteilhaft ist ein erster Teil der Spreizstege 112 Teil einer ersten Spritzgusskomponente 170 des Dübels 100, wohingegen ein zweiter Teil der Spreizstege 114 Teil einer zweiten Spritzgusskomponente 180 des Dübels 100 sind. Wahlweise können die erste Spritzgusskomponente 170 und die zweite Spritzgusskomponente 180 aus denselben Kunststoffmaterialien oder aus unterschiedlichen Kunststoffmaterialien hergestellt sein. Dieser Freiheitsgrad erlaubt die gezielte Einstellung der Eigenschaften des Dübels 100, insbesondere seiner Spreizstege 112, 114.

Die in Umfangsrichtung bündig aneinander anliegenden, aber getrennten Spreizstege 112, 114 liegen, wie in Figur 2 gezeigt, vor dem Eindrehen des Befestigungselements 106 in die Öffnung 104 des Dübels 100, aneinander für den Klebstoff 111 undurchlässig und vorzugsweise auch luftundurchlässig aneinander an. Dadurch bilden die Spreizstege 112, 114 gemeinsam mit dem Kopf 108 und einem unten näher beschriebenen Stopfen 113 einen dübelintegralen Klebstoffbehälter zum dichten Aufnehmen des Klebstoffs 111, ohne dass dieser im Lagerzustand des Dübels 100 aushärtet. Ungeachtet dieser Dichtungsfunktion sind gemäß Figur 1 und Figur 2 die in Umfangsrichtung bündig aneinander anliegenden, aber getrennten Spreizstege 112, 114 nicht miteinander stoffschlüssig verbunden. Vielmehr bilden die benachbarten Spreizstege 112, 114 dicht an dicht aneinander liegende Streben, die aber unverbunden sind und lediglich reibschlüssig aneinander anliegen können. Dies fördert ein kraftarmes Spreizen der Spreizstege 112, 114 bei Eindrehen des Befestigungselements 106 in die Öffnung 104 des Dübels 100 und ein wirksames Überführen von Klebstoff 111 aus dem Dübel 100 in ein Setzloch.

Wie bereits angesprochen, weist der Dübel 100 ferner einen den Klebstoff 111 im Inneren des Dübels 100 außenseitig verschließenden Stopfen 113 auf. Der Stopfen 113 kann beispielsweise ebenfalls aus Kunststoff gefertigt werden. An einer Dünnstelle 171 kann der klebstoffdichte Stopfen 113 leicht von einer Spitze eines als Schraube ausgebildeten Befestigungselements 106 durchdrungen werden. Ein Hülsenabschnitt 173 des Stopfens 113 liegt flächig und umfänglich an einer Dübelwandung des Fußes 102 an und kann dort reibschlüssig und/oder formschlüssig angebracht oder dort verklebt sein. Das gesamte Innenvolumen des Dübels 100, das vom Stopfen 113, vom Kopf 108 und von der Mantelfläche des Dübels 100 mit seinen Spreizstegen 112, 114 dichtend begrenzt ist, kann mit dem fließfähigen Klebstoff 113 gefüllt sein. Dabei kann mit Vorteil der Klebstoff 111 unmittelbar oder direkt an den Spreizstegen 112, 114, dem Stopfen 113 und dem Kopf 108 anliegen. Somit kann der Dübel 100 im Bereich des Klebstoffs 111 in Umfangsrichtung und kopfseitig sowie an der vom Stopfen 113 gebildeten Begrenzungsfläche geschlossen ist. Vorteilhaft kann dadurch ein zusätzlicher Behälter (insbesondere Beutel) entbehrlich sein, in dem der Klebstoff 111 gelagert ist. Anschaulich bildet der Kunststoff des Dübels 100 samt Stopfen 113 einen dübelintegralen Behälter für den Klebstoff 111.

Bevorzugt ist der Klebstoff 111 ein Einkomponenten-Klebstoff, der aushärtet, wenn er aus dem Dübel 100 austritt und in Wirkverbindung mit der umgebenden Atmosphäre bzw. einer Wandung des Verankerungsgrundes 119 gerät.

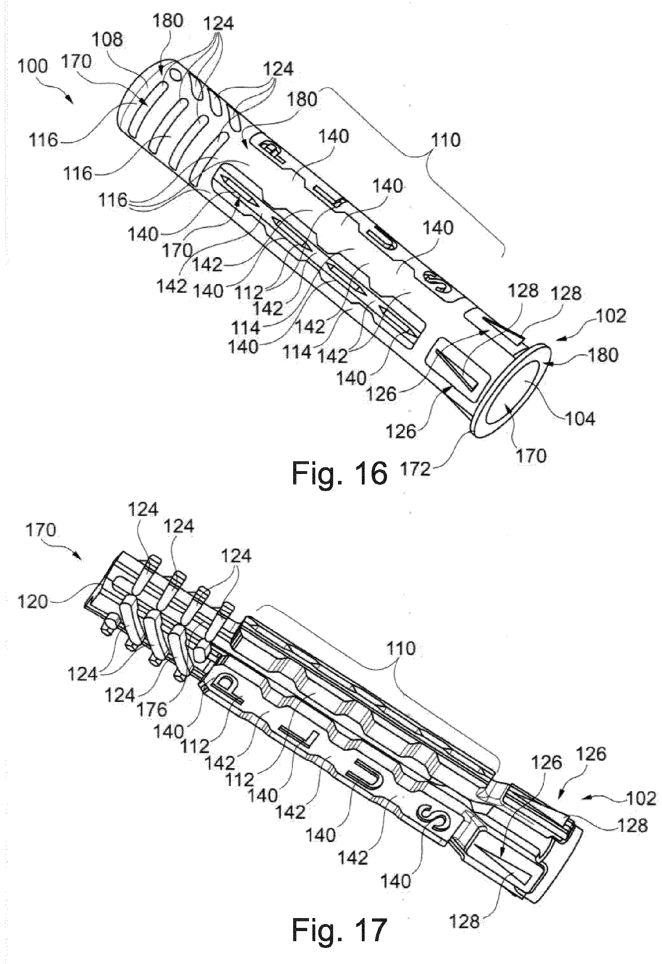

Wie gezeigt, sind die ersten Spreizstege 112 der ersten Spritzgusskomponente 170 und die zweiten Spreizstege 114 der zweiten Spritzgusskomponente 180 in Umfangsrichtung des Dübels 100 alternierend angeordnet und miteinander verzahnt. Die Spreizstege 112, 114 weisen in Axialrichtung des Dübels 100 alternierend breitere Abschnitte (siehe Bezugszeichen 140 in Figur 16 bis Figur 19) und schmälere Abschnitte (vergleiche Bezugszeichen 142 in Figur 16 bis Figur 19) auf. Der dargestellte Spreizbereich 110 ist entlang seiner gesamten axialen Länge spaltfrei geschlossen. Dies ermöglicht das dichte Lagern des Klebstoffs 111 im Inneren des Dübels 100, ohne dass die Spreizstege 112, 114 stofflich miteinander verbunden sind.

Meistens ist zwischen dem Zeitpunkt der Montage eines Bauteils und der tatsächlichen maximalen Belastung eine größere Zeitspanne vorhanden (beispielsweise bei Montage einer Markise und einer erst später einwirkenden Windlast). Diese Zeitspanne steht bei dem Dübel 100 für die Aushärtung des Klebstoffs 111 zur Verfügung. Der Klebstoff 111 ist in der geschlossenen Dübelhülse des Dübels 100 bereits enthalten und ist mit dem Stöpsel oder Stopfen 113 verschlossen. Der gemäß Figur 1 und Figur 2 als Einkomponentenkleber ausgebildete Klebstoff 111 kann zwar eine längere Aushärtezeit benötigen als ein Zweikomponentenkleber, ist aber in der Anwendung wesentlich einfacher. Die Aushärtezeit spielt bei dem Dübel 100 gemäß einem bevorzugten Ausführungsbeispiel der Erfindung aber keine nennenswerte Rolle, da bis zum Aushärten des Klebstoffs 111 die mechanische Spreizwirkung der Spreizstege 112, 114 bereits für eine mechanische Befestigung sorgt. Anschaulich bildet der Dübel 100 selbst die Verpackung des Klebstoffs 111. Der aus Kunststoff hergestellte Dübel 100 nimmt Dank seiner Spreizstege 112, 114 die Belastung bei der Montage auf. Der später ausgehärtete Klebstoff 111 ermöglicht die höhere Belastung beim Betrieb eines Bauteils, das mittels des Dübels 100 an einem Verankerungsgrund 119 montiert wird.

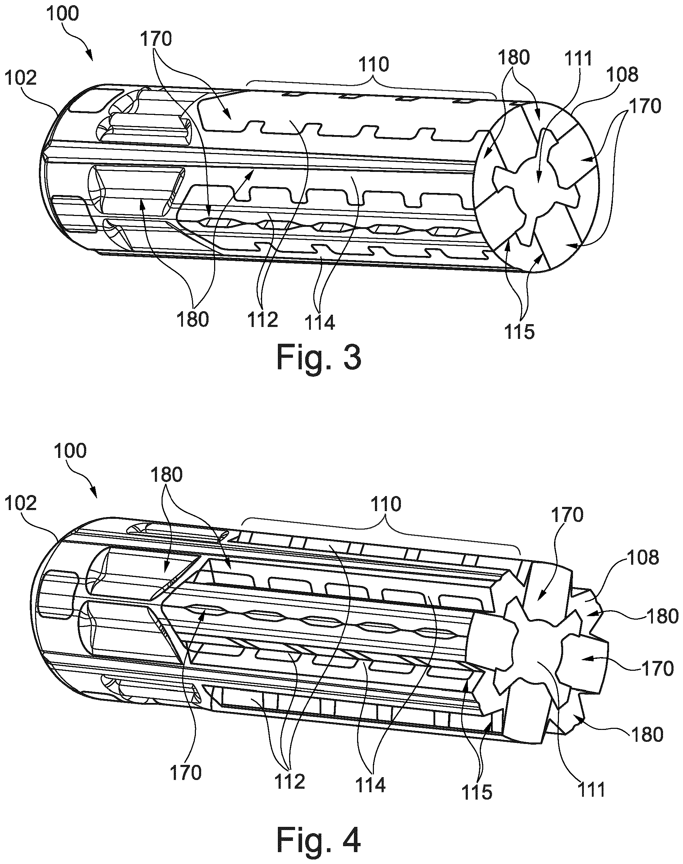

**Figur 3** zeigt eine dreidimensionale Ansicht eines Dübels 100 gemäß einem anderen exemplarischen Ausführungsbeispiel der Erfindung.

Bei dem Dübel 100 gemäß Figur 3 sind zwischen der ersten Spritzgusskomponente 170 und der zweiten Spritzgusskomponente 180 umfangsseitig zwischen den Spreizstegen 112, 114 und am Kopf 108 Komponentenübergänge zwischen den Spritzgusskomponenten 170, 180 gebildet, die bei Einführen des Befestigungselements 106 Zwischenräume zum Austreten des Klebstoffs 111 bilden. Bei Einführen eines Befestigungselements 106 werden dadurch insbesondere auch am Kopf 108 längliche Zwischenräume 115 gebildet. Bezugszeichen 115 in Figur 3 zeigt daher Grenzflächen zwischen den beiden Spritzgusskomponenten 170, 180 des Dübels 100, durch die bei Setzen eines Befestigungselements 106 Klebstoff 111 aus dem Dübel 100 austritt, und zwar gemäß Figur 3 auch stirnflächig.

Bei einem aus zwei Spritzgusskomponenten 170, 180 gebildeten Dübel 100 mit einem geschlossenen Dübelkörper ergeben sich eng aneinander liegende Grenzflächen, welche für den Klebstoff 111 dicht sind, aber beim Einschrauben einer Schraube auseinander gedrückt werden und somit den Klebstoff 111 frei austreten lassen.

Durch die Materialauswahl, insbesondere wenn identische Kunststoffmaterialien für die Spritzgusskomponenten 170, 180 des Dübels 100 verwendet werden, oder der Spritzgussprozess entsprechend gesteuert wird, kann sich beim Spritzgussprozess ein Aufschmelzen der Grenzflächen der ersten Spritzgusskomponente 170 durch die zweite Spritzgusskomponente 180 ergeben, sodass sich an den Grenzflächen beide Spritzgusskomponenten 170, 180 leicht miteinander verbinden können. Dadurch wird der Dübelkörper noch dichter, schützt den Klebstoff 111 noch besser und reißt trotzdem beim Einschrauben der Schraube sehr leicht auseinander.

**Figur 4** zeigt eine dreidimensionale Ansicht eines Dübels 100 gemäß noch einem anderen exemplarischen Ausführungsbeispiel der Erfindung.

Bei dem Dübel 100 gemäß Figur 4 sind umfangsseitig zwischen den Spreizstegen 112, 114 und am Kopf 108 Komponentenübergänge zwischen den Spritzgusskomponenten 170, 180 gebildet, die bei Einführen des Befestigungselements 106 Zwischenräume zum Austreten des Klebstoffs 111 bilden. Bei Einführen eines Befestigungselements 106 werden dadurch in Axialrichtung und am Kopf 108 längliche Zwischenräume 115, insbesondere auch zwischen den getrennten Spreizstegen 112, 114, gebildet. Bezugszeichen 115 in Figur 4 zeigt daher längliche Ausnehmungen an der Oberfläche, die für den austretenden Klebstoff 111 größere Klebeflächen bilden.

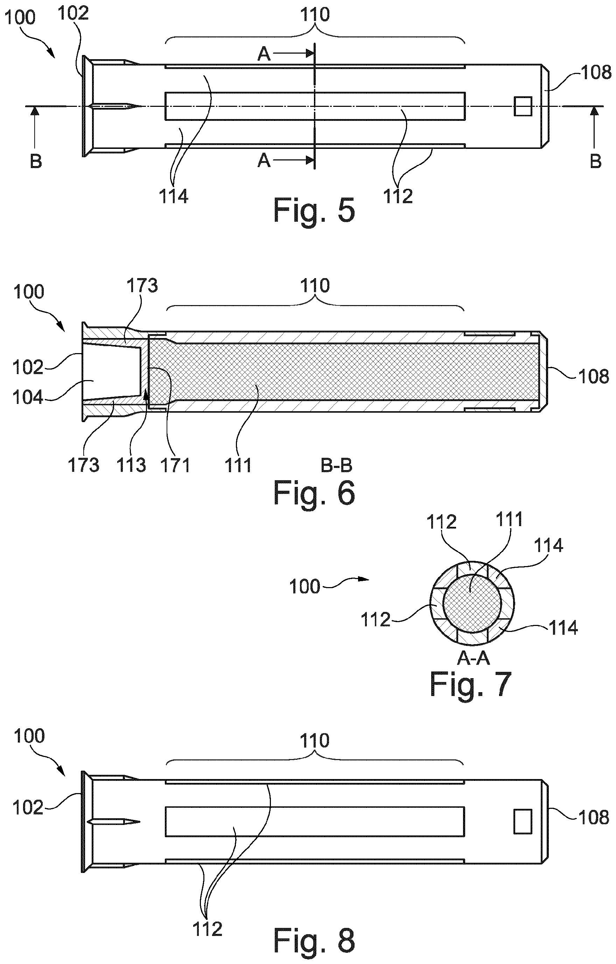

Figur 5 bis Figur 8 zeigen unterschiedliche Ansichten eines Dübels 100 gemäß einem weiteren exemplarischen Ausführungsbeispiel der Erfindung. Genauer gesagt zeigt **Figur 5** eine Seitenansicht des Dübels 100 und definiert Schnittebenen A-A bzw. B-B. **Figur 6** zeigt eine Schnittansicht des Dübels 100 gemäß Figur 5 entlang einer Schnittebene B-B. **Figur 7** zeigt eine Schnittansicht des Dübels 100 gemäß Figur 5 entlang einer Schnittebene A-A. **Figur 8** zeigt nochmals eine Seitenansicht des Dübels 100 gemäß Figur 5.

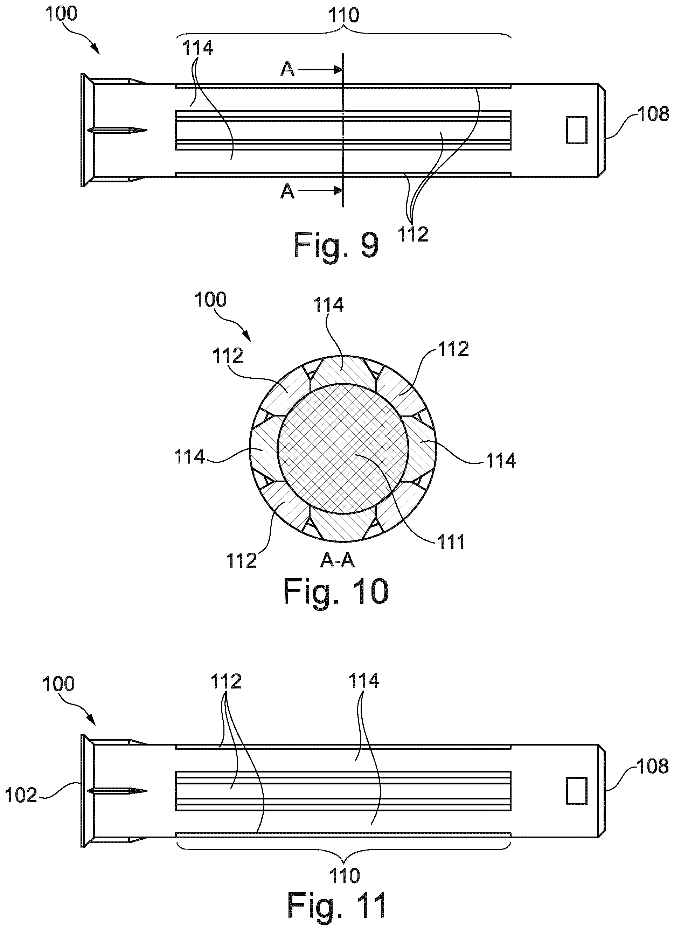

Figur 9 bis Figur 11 zeigen unterschiedliche Ansichten eines Dübels 100 gemäß einem weiteren exemplarischen Ausführungsbeispiel der Erfindung. Genauer gesagt zeigt **Figur 9** eine Seitenansicht des Dübels 100 und definiert eine Schnittebene A-A. **Figur 10** zeigt eine Schnittansicht des Dübels 100 gemäß Figur 9 entlang einer Schnittebene A-A. **Figur 11** zeigt nochmals eine Seitenansicht des Dübels 100 gemäß Figur 9.

Die Ausführungsformen gemäß Figur 5 bis Figur 8 bzw. gemäß Figur 9 bis Figur 11 unterscheiden sich durch eine unterschiedliche Charakteristik der Kontaktflächen und Formgebung der Spreizstege 112, 114.

Figur 12 bis Figur 15 zeigen unterschiedliche Ansichten einer Dübelanordnung 117 mit einem Dübel 100 und einem Befestigungselement 106 gemäß einem weiteren exemplarischen Ausführungsbeispiel der Erfindung. Genauer gesagt zeigt **Figur 12** eine Seitenansicht des Dübels 100 samt Befestigungselement 106 und definiert Schnittebenen A-A bzw. B-B. **Figur 13** zeigt eine Schnittansicht des Dübels 100 samt Befestigungselement 106 gemäß Figur 12 entlang einer Schnittebene B-B. **Figur 14** zeigt eine Schnittansicht des Dübels 100 samt Befestigungselement 106 gemäß Figur 12 entlang einer Schnittebene A-A. **Figur 15** zeigt nochmals eine Seitenansicht des Dübels 100 samt Befestigungselement 106 gemäß Figur 12, die nun in einem Verankerungsgrund 119 gesetzt sind.

Bezugnehmend auf Figur 12 bis Figur 15 ist somit eine Dübelanordnung 117 geschaffen, die einen Dübel 100 mit darin enthaltenen Klebstoff 111 und ein als Schraube ausgebildetes Befestigungselement 106 aufweist, das in die Öffnung 104 des Dübels 100 gesetzt ist. Wie in Figur 15 gezeigt, tritt bei Einführen des Befestigungselements 106 in den Dübel 100 der Klebstoff 111 aus dessen Inneren aus dem Dübel 100 aus und gelangt dadurch in ein Setzloch 121 in dem Verankerungsgrund 119. Durch das Eindrehen des als Schraube ausgebildeten Befestigungselements 106 in die Öffnung 104 des Dübels 104 resultiert auch ein Aufspreizen der Spreizstege 112, 114. Das Aufspreizen der Spreizstege 112, 114 führt zu einem mechanischen Anpressen der Spreizstege 112, 114 an eine Wandung des Setzlochs 121 und folglich zu einer mechanischen Verankerung des Dübels 100 samt Befestigungselement 106 im Verankerungsgrund 119. Durch das Aufspreizen der vormals bündig und spaltfrei aneinander anliegenden Spreizstege 112, 114 entstehen auch Zwischenräume zwischen den getrennten Spreizstegen 112, 114, durch die mittels des Befestigungselements 106 komprimierter Klebstoff 111 aus dem Dübel 100 in das Setzloch 121 austritt.

Figur 15 zeigt den beispielsweise als Betonwand ausgebildeten Verankerungsgrund 119 mit dem Setzloch 121 (beispielsweise ein Bohrloch), in das der Dübel 100 mit darin eingeführtem Befestigungselement 106 eingeführt ist. In dem in Figur 15 gezeigten Zustand ist ein Teil des Klebstoffs 111 befestigend zwischen einer Außenwand des Dübels 100 und einer das Setzloch 121 begrenzenden Wandung 123 angeordnet. Darüber hinaus drücken die aufgespreizten Spreizstege 112, 114 befestigend gegen die das Setzloch 121 begrenzende Wandung 123. Figur 15 zeigt auch, dass der Verankerungsgrund 119 eine Hohlkammer 125 aufweisen kann, in die ein Teil des Klebstoffs 111 befestigend einfließen kann, um dort einen Hinterschnitt zu erzeugen.

Um die in Figur 15 dargestellte Dübelanordnung 117 zu erhalten, kann zunächst das Setzloch 121 in dem Verankerungsgrund 119 gebildet werden, beispielsweise gebohrt werden. Dann kann der Dübel 100 (samt dem darin enthaltenen Klebstoff 111) in das Setzloch 121 gesetzt werden. Nachfolgend kann das als Schraube ausgebildete Befestigungselement 106 in die Öffnung 104 des Dübels 100 eingedreht werden. Dadurch erfolgt ein radiales Aufspreizen der Spreizstege 112, 114. Ferner bewirkt das Eindrehen des Befestigungselements 106 in die Öffnung 104 ein Durchstoßen des Stopfens 113 durch eine Spitze des Befestigungselements 106. Dadurch wirkt das Befestigungselement 106 auf den Klebstoff 111 in dem Dübel 101, wodurch es zu einem Austreten von Klebstoff 111 aus dem Inneren des Dübels 100 kommt. Der Klebstoff 111 fließt daher durch die getrennten Spreizstege 112, 114 hindurch in das Setzloch 121 und härtet dort aus. Dadurch kommt es zu einem klebenden Befestigen zwischen dem Dübel 100 und der das Setzloch 121 begrenzenden Wandung 123 des Verankerungsgrunds 119. Infolge des Aufspreizens der Spreizstege 112, 114 gegen die das Setzloch 121 begrenzende Wandung 123 wird zudem ein mechanisches Befestigen des Dübels 100 im Verankerungsgrund 119 erreicht.

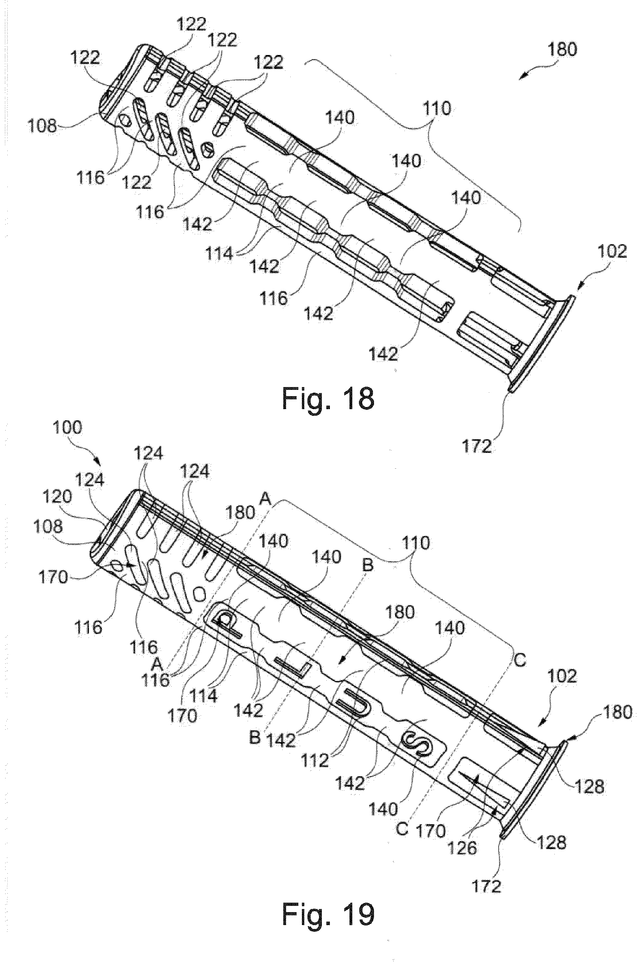

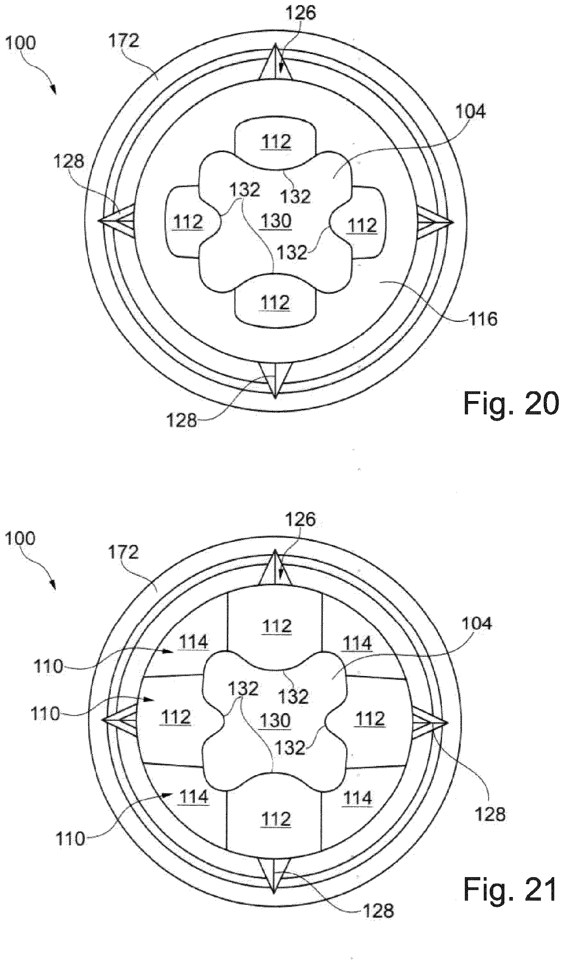

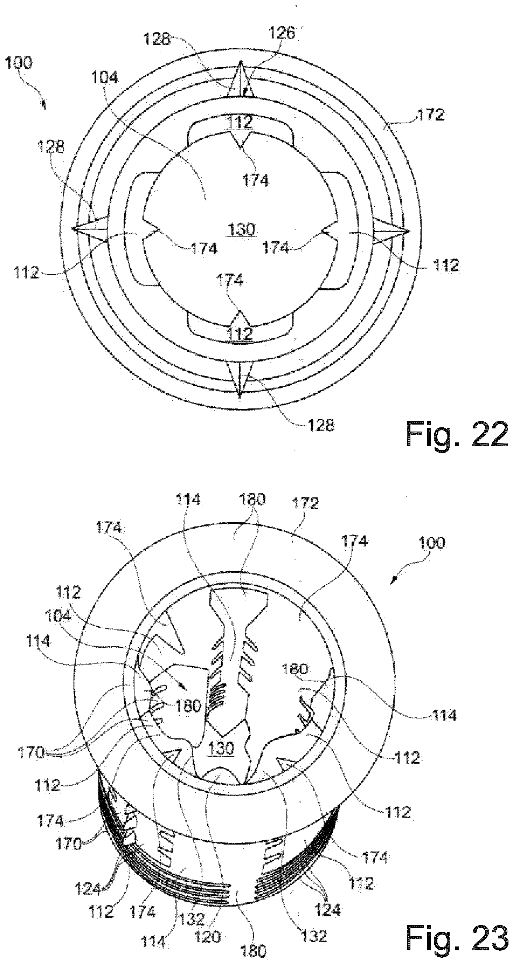

**Figur 16** zeigt eine dreidimensionale Ansicht eines Dübels 100 gemäß einem exemplarischen Ausführungsbeispiel der Erfindung, der aus zwei Spritzgusskomponenten 170, 180 entsprechend zweier getrennter Spritzgussverfahren aufgebaut ist. **Figur 17** zeigt eine erste Spritzgusskomponente 170 des Dübels 100 gemäß Figur 16 ohne die zweite Spritzgusskomponente 180. **Figur 18** zeigt die zweite Spritzgusskomponente 180 des Dübels 100 gemäß Figur 16 ohne die erste Spritzgusskomponente 170. **Figur 19** zeigt eine Seitenansicht des gesamten Dübels 100 gemäß Figur 16, d.h. mit beiden Spritzgusskomponenten 170, 180. **Figur 20** zeigt eine Schnittansicht des Dübels 100 gemäß Figur 16 bis Figur 19 entlang einer in Figur 19 dargestellten Schnittebene A-A. **Figur 21** zeigt eine Schnittansicht des Dübels 100 gemäß Figur 16 bis Figur 19 entlang einer in Figur 19 dargestellten Schnittebene B-B. **Figur 22** zeigt eine Schnittansicht des Dübels 100 gemäß Figur 16 bis Figur 19 entlang einer in Figur 19 dargestellten Schnittebene C-C. **Figur 23** zeigt eine räumliche Ansicht in ein Inneres des Dübels 100 gemäß Figur 16 bis Figur 22.

Obwohl dies in Figur 16 bis Figur 23 nicht gezeigt ist, kann in dem dort dargestellten Dübel 100 Klebstoff 111 enthalten sein und kann dieser mittels eines Stopfens 113 oder eines anderen Verschlussmittels nach außen hin verschlossen sein, zum Beispiel wie dies bezugnehmend auf Figur 1 bis Figur 15 beschrieben ist.

Der in Figur 16 bis Figur 23 dargestellte Dübel 100 ist als Kunststoffdübel ausgebildet, d.h. besteht ausschließlich aus Kunststoff. Kunststoffe der ersten Spritzgusskomponente 170 und der zweiten Spritzgusskomponente 180 können identisch oder unterschiedlich sein.

Der Dübel 100 weist als ersten Endabschnitt einen Fuß 102 mit einem außenseitigen ringförmigen Kragen 172 und einer Öffnung 104 zum Einführen eines vorzugsweise als Schraube ausgebildeten und in Figur 9 und Figur 10 dargestellten Befestigungselements 106 auf. Die Öffnung 104 an der Außenseite des Dübels 100 im Bereich des Fußes 102 mündet im Inneren des Dübels 100 in einen Aufnahmekanal 130 zum Aufnehmen des Befestigungselements 106 (vergleiche Figur 20 bis Figur 23). An seiner Außenseite hat der Fuß 102 eine Mitdrehsicherung 126 zum Vermeiden eines Mitdrehens des Dübels 100 bei einem drehenden Einbringen eines als Schraube ausgebildeten Befestigungselements 106 in die Öffnung 104 und nachfolgend in den Aufnahmekanal 130. Die Mitdrehsicherung 126 ist in dem dargestellten Ausführungsbeispiel durch vier in Umfangsrichtung außenseitig verteilt angeordnete und radial über eine Mantelfläche des Dübels 100 überstehende Dorne 128 (zum Beispiel aus Hartkunststoff) mit scharfen Schneidkanten ausgebildet. Diese Schneidkanten können sich nach Einführen des Dübels 100 in ein Bohrloch (oder dergleichen) in einem Untergrund 118 (siehe Figur 9 und Figur 10) in den Untergrund 118 eingraben und dadurch einen Verdrehschutz bewerkstelligen.

Ferner weist der Dübel 100 als zweiten Endabschnitt, der dem Fuß 102 gegenüberliegt, einen kappenförmigen Kopf 108 am Einsteckende des Dübels 100 auf. Der kappenförmige und daher geschlossene Kopf 108 hat eine distale Stirnplatte 120.

Ferner weist der Kopf 108 in einem hohlzylindrischen Abschnitt Dehnungsfugen 122 auf (siehe Figur 18), die mit Rippen 124 gefüllt sind (siehe Figur 16 und Figur 17). Die Rippen 124 sind aus demselben Material und in demselben Herstellungsverfahren ausgebildet wie die ersten Spreizstege 112. Ein Teil der Rippen 124 erstreckt sich orthogonal zu der Axialrichtung des Dübels 100. Ein anderer Teil der Rippen 124 in den Dehnungsfugen 122 verläuft in einem spitzen Winkel schräg zu der Axialrichtung des Dübels 100.

Darüber hinaus ist ein Spreizbereich 110 zwischen dem Fuß 102 und dem Kopf 108 angeordnet und mit einer Mehrzahl von in Umfangsrichtung bündig bzw. unmittelbar aneinander anliegenden, aber getrennten Spreizstegen 112, 114 versehen. Der Spreizbereich 110 ist jener Bereich des Dübels 100, der nach Einbringen des Dübels 100 in einen als Vollkörper ausgebildeten Untergrund 118 und nach Einbringen eines als Schraube ausgebildeten Befestigungselements 106 in die Öffnung 104 radial aufgeweitet wird und dabei aufspreizt. Hingegen erfährt weder der Fuß 102 noch der Kopf 108 bei der Montage des Dübels 100 samt Befestigungselement 106 eine Spreizung. Eine gewisse Spreizung am Kopf 108 des Dübels 100 entsteht durch das Einbringen des Befestigungselements 106, insbesondere einer Schraube.

Erste Spreizstege 112 der ersten Spritzgusskomponente 170 sind, wie in Figur 16 und Figur 17 dargestellt, zwar kopfseitig und fußseitig miteinander verbunden, sind jedoch nicht mit zweiten Spreizstegen 114 der zweiten Spritzgusskomponente 180 verbunden. Die zweiten Spreizstege 114 sind sowohl am Fuß 102 als auch am Kopf 108 miteinander verbunden und sind einstückig und einstoffig mit bzw. als Teil einer zusammenhängenden Matrix 116 ausgebildet, wie in Figur 16 und Figur 18 dargestellt.

Die ersten Spreizstege 112 und die zweiten Spreizstege 114 können wahlweise aus unterschiedlichen Materialien oder aus dem gleichen Material hergestellt sein, wobei diese Materialien in zwei getrennten und aufeinanderfolgenden Spritzgussverfahren zum Einsatz kommen. Im dargestellten Ausführungsbeispiel sind die ersten Spreizstege 112 flexibler ausgebildet als die zweiten Spreizstege 114. Anders ausgedrückt sind die zweiten Spreizstege 114 im Vergleich zu den ersten Spreizstegen 112 rigider ausgebildet. Zum Beispiel können die zweiten Spreizstege 114 aus einem Hartkunststoff oder einem faserverstärkten Kunststoff hergestellt sein. Die ersten Spreizstege 112 hingegen können aus einem Weichkunststoff hergestellt sein, zum Beispiel Polyethylen.

Wie in Figur 16 und Figur 21 zu erkennen, sind die ersten Spreizstege 112 und die zweiten Spreizstege 114 in Umfangsrichtung alternierend angeordnet. Im dargestellten Ausführungsbeispiel gibt es vier erste Spreizstege 112 und vier zweite Spreizstege 114, wobei eine andere Anzahl erster Spreizstege 112 bzw. zweiter Spreizstege 114 möglich ist. Die ersten Spreizstege 112 und die zweiten Spreizstege 114 sind zueinander mit Berührkontakt und formschlüssig ausgebildet, aber bilden voneinander getrennte Körper, die auch getrennt voneinander aufspreizen können. Zum Beispiel Figur 21 kann entnommen werden, dass der Spreizbereich 110 in Umfangsrichtung spaltfrei geschlossen ist. Dies wird erreicht, indem jeweils benachbarte erste Spreizstege 112 und zweite Spreizstege 114 aneinander mit physischem Kontakt anliegen, ohne dazwischen Zwischenräume oder Schlitze zu bilden. Anschaulich ist mittels Spritzgießens eine zusammenhängende Matrix 116 gebildet, welche auch die zweiten Spreizstege 114 enthält. Die ersten Spreizstege 112 bilden nicht Teil der Matrix 116, sind aber abschnittsweise in Aussparungen der Matrix 116 positioniert.

Figur 16 und Figur 19 kann entnommen werden, dass die ersten Spreizstege 112 und die zweiten Spreizstege 114 miteinander verzahnt sind. Zueinander invers geformte Zahnstrukturen der Spreizstege 112, 114 sind derart konfiguriert, dass in Axialrichtung (die einer Einführrichtung eines Befestigungselements 106 in die Öffnung 104 des Dübels 100 entspricht und senkrecht zu einer Papierebene gemäß Figur 20 bis Figur 22 verläuft) des Dübels 100 abwechselnd breitere Abschnitte 140 und schmälere Abschnitte 142 gebildet sind. Dies ist zum Beispiel in Figur 19 zu erkennen.

Im Spreizbereich 110 und gegebenenfalls im Kopf 108, vorzugsweise jedoch nicht im Bereich des Fußes 102, ist ein hohler und sich an die Öffnung 104 anschließender Aufnahmekanal 130 zum Aufnehmen eines Befestigungselements 106 im Inneren des Dübels 100 ausgebildet. Wie am besten in Figur 21 dargestellt, hat der Aufnahmekanal 130 mehrere innenseitig hineinragende Überstände 132, die als innenseitige Endbereiche der ersten Spreizstege 112 ausgebildet sind. Wird das Befestigungselement 106 in die Öffnung 104 und nachfolgend den Aufnahmekanal 130 eingeführt, drückt das Befestigungselement 106 die Überstände 132 radial nach außen, wodurch die ersten Spreizstege 112 und dann auch die zweiten Spreizstege 114 nach außen auf eine Bohrlochwandung in dem Untergrund 118 aufgespreizt und aufgepresst werden.

Figur 17 zeigt anschaulich das Ergebnis des ersten Spritzgussprozesses, mit dem die erste Spritzgusskomponente 170 gefertigt wird. In Figur 17 ist zu erkennen, dass die vier ersten Spreizstege 112 am Kopf 108 und am Fuß 112 miteinander verbunden sind. Eine Verbindungsstruktur 176 dient als Füllmaterial bei einer Verwendung des Dübels 100 als Vollbaustoffeinsatz und bildet teilweise einen Rand bzw. eine Unterlage für einen nachfolgenden zweiten Spritzgussprozess.

Figur 18 stellt die zweite Spritzgusskomponente 180 als Ergebnis des zweiten Spritzgussprozesses isoliert dar, d.h. ohne Darstellung der ersten Spritzgusskomponente 170. Die vier zweiten Spreizstege 114 sind ebenfalls am Kopf 108 und am Fuß 112 miteinander verbunden, nicht aber mit den ersten Spreizstegen 112. Figur 18 zeigt die Dehnungsfugen 122, die sowohl ein radiales Aufspreizen fördern als auch ein leichteres Einbringen einer Schraube als Befestigungselement 106 ermöglichen. Ein Teil dieser Dehnungsfugen 122 ist schräg zu einer Axialrichtung des Dübels 100 ausgerichtet, was eine Aufweitung im Durchmesser ermöglicht. Entsprechende Stege können beim Einschrauben in axialer Richtung geformt werden.

Der in Figur 19 dargestellte fertige Dübel 100 enthält die ersten Spreizstege 112 als Teil der ersten Spritzgusskomponente 170 und die zweiten Spreizstege 114 als Teil der anderen zweiten Spritzgusskomponente 180. Zwischen den ersten Spreizstegen 112 und den zweiten Spreizstegen 114 ist keine mechanische Verbindung gebildet.

Zum Herstellen des Dübels 100 kann zunächst die erste Spritzgusskomponente 170 gemäß Figur 17 durch ein erstes Spritzgussverfahren unter Verwendung eines ersten Spritzgusswerkzeugs hergestellt werden. Dabei werden auch die ersten Spreizstege 112 gebildet. Nachfolgend kann die zweite Spritzgusskomponente 180 gemäß Figur 18 durch einen zweites Spritzgussverfahren unter Verwendung eines zweiten Spritzgusswerkzeugs hergestellt werden, wodurch auch die zweiten Spreizstege 114 gebildet werden. Hierbei kann die erste Spritzgusskomponente 170 durch die zweite Spritzgusskomponente 180 überspritzt werden. Als Ergebnis werden die Spreizstege 112, 114 enthalten, die zwar mit Berührkontakt aneinander anliegen, aber getrennte Körper sind, die bei Einbringen eines Befestigungselements 106 in den Dübel 100 auch getrennt voneinander aufspreizen können.

In Figur 22 und in Figur 23 zu erkennen sind Spreizdorne 174 an den ersten Spreizstegen 112. Die Spreizdorne 174 erstrecken sich in die Öffnung 104 bzw. bis in den Aufnahmekanal 130 hinein.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100), aufweisend:
einen Fuß (102) mit einer Öffnung (104) zum Einführen eines Befestigungselements (106);
einen Kopf (108);
einen Spreizbereich (110) zwischen dem Fuß (102) und dem Kopf (108) mit einer Mehrzahl von in Umfangsrichtung bündig aneinander anliegenden, aber getrennten Spreizstegen (112, 114); und
Klebstoff (111) im Inneren des Dübels (100), der bei Einführen des Befestigungselements (106) und daraus resultierendem Aufspreizen der Spreizstege (112, 114) durch dadurch entstehende Zwischenräume zwischen den getrennten Spreizstegen (112, 114) aus dem Dübel (100) austritt.

2. Dübel (100) gemäß Anspruch 1, wobei ein erster Teil der Spreizstege (112) Teil einer ersten Spritzgusskomponente (170) des Dübels (100) sind und ein zweiter Teil der Spreizstege (114) Teil einer zweiten Spritzgusskomponente (180) des Dübels (100) sind;
vorzugsweise ferner aufweisend eines der folgenden Merkmale:
wobei die erste Spritzgusskomponente (170) und die zweite Spritzgusskomponente (180) aus denselben Materialien hergestellt sind; wobei die erste Spritzgusskomponente (170) und die zweite Spritzgusskomponente (180) aus unterschiedlichen Materialien hergestellt sind; wobei zwischen der ersten Spritzgusskomponente (170) und der zweiten Spritzgusskomponente (180) umfangsseitig zwischen den Spreizstegen (112, 114) und/oder am Kopf (108) Komponentenübergänge gebildet sind, die bei Einführen des Befestigungselements (106) Zwischenräume zum Austreten des Klebstoffs (111) bilden.

3. Dübel (100) gemäß Anspruch 1 oder 2, wobei die in Umfangsrichtung bündig aneinander anliegenden, aber getrennten Spreizstege (112, 114) aneinander klebstoffundurchlässig und/oder luftundurchlässig anliegen.

4. Dübel (100) gemäß einem der Ansprüche 1 bis 3, wobei die in Umfangsrichtung bündig aneinander anliegenden, aber getrennten Spreizstege (112, 114) nicht miteinander stoffschlüssig verbunden sind.

5. Dübel (100) gemäß einem der Ansprüche 1 bis 3, wobei die in Umfangsrichtung bündig aneinander anliegenden, aber getrennten Spreizstege (112, 114) aneinander integral anhaften.

6. Dübel (100) gemäß einem der Ansprüche 1 bis 5, aufweisend ein den Klebstoff (111) im Inneren des Dübels (100) außenseitig verschließendes Verschlussmittel, insbesondere einen den Klebstoff (111) im Inneren des Dübels (100) außenseitig verschließenden Stopfen (113) in der Öffnung (104).

7. Dübel (100) gemäß einem der Ansprüche 1 bis 6, wobei der Klebstoff (111) unmittelbar an zumindest einem Teil der Spreizstege (112, 114) anliegt.

8. Dübel (100) gemäß einem der Ansprüche 1 bis 7, wobei der Dübel (100) zumindest im Bereich des Klebstoffs (111) in Umfangsrichtung und am Kopf (108) geschlossen ist.

9. Dübel (100) gemäß einem der Ansprüche 1 bis 8, ferner aufweisend mindestens eines der folgenden Merkmale:
wobei der Klebstoff (111) ein Einkomponenten-Klebstoff ist;
wobei in dem Spreizbereich (110) die Mehrzahl von Spreizstegen (112, 114) so ausgebildet sind, dass bei Einführen des Befestigungselements (106), insbesondere in Axialrichtung und/oder am Kopf (108), längliche Zwischenräume (115), insbesondere zwischen den getrennten Spreizstegen (112, 114), gebildet werden;
wobei die Spreizstege (112, 114) erste Spreizstege (112) und zweite Spreizstege (114) aufweisen, wobei die ersten Spreizstege (112) am Fuß (102) und/oder am Kopf (108) miteinander verbunden sind und/oder wobei die zweiten Spreizstege (114) am Fuß (102) und/oder am Kopf (108) miteinander verbunden sind;
wobei die ersten Spreizstege (112) und die zweiten Spreizstege (114) in Umfangsrichtung alternierend angeordnet sind;
wobei die Spreizstege (112, 114) miteinander verzahnt sind;
wobei zumindest ein Teil der Spreizstege (112, 114) in Axialrichtung des Dübels (100) alternierend breitere Abschnitte (140) und schmälere Abschnitte (142) aufweist;
wobei der Spreizbereich (110) in Umfangsrichtung, insbesondere entlang einer gesamten axialen Länge des Spreizbereichs (110), spaltfrei geschlossen ist.

10. Dübelanordnung (117), aufweisend:
einen Dübel (100) gemäß einem der Ansprüche 1 bis 9;
ein Befestigungselement (106) zum Einführen in oder eingeführt in die Öffnung (104) des Dübels (100) derart, dass der Klebstoff (111) im Inneren des Dübels (100) bei Einführen des Befestigungselements (106) und daraus resultierendem Aufspreizen der Spreizstege (112, 114) durch dadurch entstehende Zwischenräume zwischen den getrennten Spreizstegen (112, 114) aus dem Dübel (100) austritt, insbesondere mittels des Befestigungselements (106) durch die Zwischenräume gepresst wird.

11. Dübelanordnung (117) gemäß Anspruch 10, aufweisend einen Verankerungsgrund (119) mit einem Setzloch (121), in das der Dübel (100) mit darin eingeführtem Befestigungselement (106) so eingeführt ist, dass zumindest ein Teil des Klebstoffs (111) befestigend zwischen einer Außenwand des Dübels (100) und einer das Setzloch (121) begrenzenden Wandung (123) angeordnet ist.

12. Dübelanordnung (117) gemäß Anspruch 11, wobei zumindest ein Teil der aufgespreizten Spreizstege (112, 114) befestigend gegen die das Setzloch (121) begrenzende Wandung (123) drücken.

13. Dübelanordnung (117) gemäß Anspruch 11 oder 12, wobei der Verankerungsgrund (119) mindestens eine Hohlkammer (125) aufweist, in der ein Teil des Klebstoffs (111) angeordnet ist.

14. Verfahren zum Setzen eines Dübels (100) gemäß einem der Ansprüche 1 bis 9 in ein Setzloch (121) in einem Verankerungsgrund (119), wobei das Verfahren aufweist:
Setzen des Dübels (100) in das Setzloch (121);
Einführen eines Befestigungselements (106) in die Öffnung (104) des Dübels (100);
Aufspreizen der Spreizstege (112, 114) infolge des Einführens; und
Austreten zumindest eines Teils des Klebstoffs (111) aus dem Inneren des Dübels (100) infolge des Einführens und durch infolge des Aufspreizens zwischen den getrennten Spreizstegen (112, 114) entstehende Zwischenräume.

15. Verfahren gemäß Anspruch 14, wobei das Verfahren infolge des Austretens ein klebendes Befestigen zwischen dem Dübel (100) und einer das Setzloch (121) begrenzenden Wandung (123) des Verankerungsgrunds (119) sowie infolge des Aufspreizens der Spreizstege (112, 114) gegen die das Setzloch (121) begrenzende Wandung (123) ein mechanisches Befestigen des Dübels (100) im Verankerungsgrund (119) aufweist.

## Claims

1. A dowel (100), comprising:
a base (102) with an opening (104) for inserting a fastening member (106);
a head (108);
an expansion region (110) between the base (102) and the head (108) with a plurality of circumferentially flush but separate expansion webs (112, 114); and
adhesive (111) inside the dowel (100), which escapes from the dowel (100) through the resulting gaps between the separate expansion webs (112, 114) when the fastening member (106) is inserted and the expansion webs (112, 114) are spread open as a result.

2. The dowel (100) according to claim 1, wherein a first part of the expansion webs (112) are part of a first injection-moulded component (170) of the dowel (100) and a second part of the expansion webs (114) are part of a second injection-moulded component (180) of the dowel (100);
preferably further comprising one of the following features:
wherein the first injection-moulded component (170) and the second injection-moulded component (180) are made of the same materials;
wherein the first injection-moulded component (170) and the second injection-moulded component (180) are made of different materials;
wherein component transitions are formed between the first injection-moulded component (170) and the second injection-moulded component (180) on the circumferential side between the expansion webs (112, 114) and/or on the head (108), which transitions form intermediate spaces for the adhesive (111) to escape when the fastening member (106) is inserted.

3. The dowel (100) according to claim 1 or 2, wherein the expansion webs (112, 114), which lie flush against one another in the circumferential direction but are separate, lie against one another in an adhesive-impermeable and/or airimpermeable manner.

4. The dowel (100) according to one of claims 1 to 3, wherein the expansion webs (112, 114), which lie flush against one another in the circumferential direction but are separate, are not bonded to one another in a materially bonding manner.

5. The dowel (100) according to any one of claims 1 to 3, wherein the circumferentially flush but separate expansion webs (112, 114) adhere integrally to each other.

6. The dowel (100) according to one of claims 1 to 5, comprising a closing means closing the adhesive (111) inside the dowel (100) on the outside, in particular a plug (113) in the opening (104) closing the adhesive (111) inside the dowel (100) on the outside.

7. The dowel (100) according to one of claims 1 to 6, wherein the adhesive (111) is in direct contact with at least a part of the expansion webs (112, 114).

8. The dowel (100) according to one of claims 1 to 7, wherein the dowel (100) is closed at least in the area of the adhesive (111) in the circumferential direction and at the head (108).

9. The dowel (100) according to any one of claims 1 to 8, further comprising at least one of the following features:
wherein the adhesive (111) is a one-component adhesive;
wherein in the expansion region (110) the plurality of expansion webs (112, 114) are formed in such a way that when the fastening member (106) is inserted, in particular in the axial direction and/or at the head (108), elongate gaps (115) are formed, in particular between the separate expansion webs (112, 114);
wherein the expansion webs (112, 114) have first expansion webs (112) and second expansion webs (114), wherein the first expansion webs (112) are connected to one another at the base (102) and/or at the head (108) and/or wherein the second expansion webs (114) are connected to one another at the base (102) and/or at the head (108);
wherein the first expansion webs (112) and the second expansion webs (114) are arranged alternately in the circumferential direction;
wherein the expansion webs (112, 114) are interlocked with one another;
wherein at least a part of the expansion webs (112, 114) has alternately wider sections (140) and narrower sections (142) in the axial direction of the dowel (100);
wherein the expansion region (110) is closed without gaps in the circumferential direction, in particular along an entire axial length of the expansion region (110).

10. A dowel arrangement (117), comprising:
a dowel (100) according to any one of claims 1 to 9;
a fastening member (106) for insertion into or introduced into the opening (104) of the dowel (100) in such a way that the adhesive (111) inside the dowel (100) exits the dowel (100) when the fastening member (106) is inserted and the expansion webs (112, 114) are spread open as a result, in particular is pressed through the gaps between the separated expansion webs (112, 114) by means of the fastening member (106).

11. The dowel arrangement (117) according to claim 10, comprising an anchoring base (119) with a setting hole (121), into which the dowel (100) with the fastening member (106) inserted therein is inserted in such a way that at least part of the adhesive (111) is arranged in a fastening manner between an outer wall of the dowel (100) and a wall (123) bounding the setting hole (121).

12. The dowel arrangement (117) according to claim 11, wherein at least a part of the spread-out expansion webs (112, 114) press in a fastening manner against the wall (123) delimiting the setting hole (121).

13. The dowel arrangement (117) according to claim 11 or 12, wherein the anchoring base (119) has at least one hollow chamber (125) in which a part of the adhesive (111) is arranged.

14. A method for setting a dowel (100) according to any one of claims 1 to 9 into a setting hole (121) in an anchoring base (119), the method comprising:
placing the dowel (100) into the setting hole (121);
inserting a fastening member (106) into the opening (104) of the dowel (100);
spreading the expansion webs (112, 114) as a result of the insertion; and
leaking at least a portion of the adhesive (111) from the interior of the dowel (100) as a result of the insertion and through gaps created between the separated expansion webs (112, 114) as a result of the spreading.

15. The method according to claim 14, wherein the method comprises an adhesive fastening between the dowel (100) and a wall (123) of the anchoring base (119) delimiting the setting hole (121) as a result of the leakage and a mechanical fastening of the dowel (100) in the anchoring base (119) as a result of the spreading of the expansion webs (112, 114) against the wall (123) delimiting the setting hole (121).

## Revendications

1. Cheville (100), comprenant :
un pied (102) avec une ouverture (104) pour l'insertion d'un élément de fixation (106) ;
une tête (108) ;
une zone d'écartement (110) entre le pied (102) et la tête (108) avec une pluralité de nervures d'écartement (112, 114) adjacentes circonférentiellement affleurantes, mais séparées ; et
de la colle (111) à l'intérieur de la cheville (100), qui sort de la cheville (100) lors de l'insertion de l'élément de fixation (106) et de l'écartement des nervures d'écartement (112, 114) qui en résulte en créant de cette manière des espaces intermédiaires entre les nervures d'écartement séparées (112, 114).

2. Cheville (100) selon la revendication 1, dans laquelle une première partie des nervures d'écartement (112) font partie d'un premier composant de moulage par injection (170) de la cheville (100) et une seconde partie des nervures d'écartement (114) font partie d'un second composant de moulage par injection (180) de la cheville (100) ;
présentant en outre de préférence une des caractéristiques ci-dessous :
dans laquelle le premier composant de moulage par injection (170) et le second composant de moulage par injection (180) sont fabriqués à partir des mêmes matériaux ; dans laquelle le premier composant de moulage par injection (170) et le second composant de moulage par injection (180) sont fabriqués à partir de matériaux différents ; dans laquelle des transitions de composants sont formées entre le premier composant de moulage par injection (170) et le second composant de moulage par injection (180) sur le côté circonférentiel entre les nervures d'écartement (112, 114) et/ou au niveau de la tête (108), qui forment des espaces intermédiaires pour la sortie de la colle (111) lors de l'insertion de l'élément de fixation (106).

3. Cheville (100) selon la revendication 1 ou 2, dans laquelle les nervures d'écartement (112, 114) adjacentes circonférentiellement affleurantes, mais séparées, sont adjacentes les unes aux autres de manière étanche à la colle et/ou étanche à l'air.

4. Cheville (100) selon l'une quelconque des revendications 1 à 3, dans laquelle les nervures d'écartement (112, 114) adjacentes circonférentiellement affleurantes, mais séparées, ne sont pas reliées les unes aux autres par liaison de matière.

5. Cheville (100) selon l'une quelconque des revendications 1 à 3, dans laquelle les nervures d'écartement (112, 114) adjacentes circonférentiellement affleurantes, mais séparées, adhèrent les unes aux autres de manière intégrale.

6. Cheville (100) selon l'une quelconque des revendications 1 à 5, présentant un moyen de fermeture enfermant la colle (111) vis-à-vis de l'extérieur à l'intérieur de la cheville (100), en particulier un bouchon (113) dans l'ouverture (104) enfermant la colle (111) vis-à-vis de l'extérieur à l'intérieur de la cheville (100).

7. Cheville (100) selon l'une quelconque des revendications 1 à 6, dans laquelle la colle (111) s'applique directement sur au moins une partie des nervures d'écartement (112, 114).

8. Cheville (100) selon l'une quelconque des revendications 1 à 7, dans laquelle la cheville (100) est fermée au moins dans la zone de la colle (111) dans la direction circonférentielle et au niveau de la tête (108).

9. Cheville selon l'une quelconque des revendications 1 à 8, comprenant en outre au moins l'une des caractéristiques suivantes :
dans laquelle la colle (111) étant une colle monocomposant ;
dans laquelle la pluralité de nervures d'écartement (112, 114) est conçue dans la zone d'écartement (110) de manière à former des espaces intermédiaires allongés (115), en particulier entre les nervures d'écartement séparées (112, 114), lors de l'insertion de l'élément de fixation (106), en particulier dans la direction axiale et/ou au niveau de la tête (108) ;
dans laquelle les nervures d'écartement (112, 114) présentent des premières nervures d'écartement (112) et des secondes nervures d'écartement (114), dans laquelle les premières nervures d'écartement (112) sont reliées mutuellement au niveau du pied (102) et/ou au niveau de la tête (108) et/ou les secondes nervures d'écartement (114) sont reliées mutuellement au niveau du pied (102) et/ou au niveau de la tête (108) ;
dans laquelle les premières nervures d'écartement (112) et les secondes nervures d'écartement (114) sont agencées en alternance dans la direction circonférentielle ;
dans laquelle les nervures d'écartement (112, 114) sont imbriquées les unes dans les autres ;
dans laquelle au moins une partie des nervures d'écartement (112, 114) présentant des sections plus larges (140) et des sections plus étroites (142) en alternance dans la direction axiale de la cheville (100) ;
dans laquelle la zone d'écartement (110) est fermée sans fente dans la direction circonférentielle, en particulier sur toute la longueur axiale de la zone d'écartement (110).

10. Agencement de cheville (117), comprenant :
une cheville (100) selon l'une quelconque des revendications 1 à 9 ;
un élément de fixation (106) pour une insertion ou une introduction dans l'ouverture (104) de la cheville (100) de telle sorte que la colle (111) à l'intérieur de la cheville (100) sort de la cheville (100) lors de l'insertion de l'élément de fixation (106) et de l'écartement des nervures d'écartement (112, 114) qui en résulte à travers les espaces intermédiaires formés entre les nervures d'écartement séparées (112, 114), en particulier au moyen de l'élément de fixation (106).

11. Agencement de cheville (117) selon la revendication 10, comprenant un support d'ancrage (119) avec un trou de mise en place (121) dans lequel la cheville (100) est insérée avec l'élément de fixation (106) inséré en son sein de telle sorte qu'au moins une partie de la colle (111) est agencée de manière à être fixée entre une paroi extérieure de la cheville (100) et une paroi (123) délimitant le trou de mise en place (121).

12. Agencement de cheville (117) selon la revendication 11, dans lequel au moins une partie des nervures d'écartement (112, 114) est fixée contre la paroi (123) délimitant le trou de mise en place (121).

13. Agencement de cheville (117) selon la revendication 11 ou 12, dans lequel le support d'ancrage (119) présente au moins une chambre creuse (125) dans laquelle est agencée une partie de la colle (111).

14. Procédé de fixation d'une cheville (100) selon l'une quelconque des revendications 1 à 9 dans un trou de mise en place (121) dans un support d'ancrage (119), le procédé comprenant les étapes consistant à :
placer la cheville (100) dans le trou de mise en place (121) ;
introduire un élément de fixation (106) dans l'ouverture (104) de la cheville (100) ;
provoquer un écartement des nervures d'écartement (112, 114) à la suite de l'insertion ; et
faire sortir au moins une partie de la colle (111) depuis l'intérieur de la cheville (100) à la suite de l'insertion et des espaces intermédiaires créés par l'écartement entre les nervures d'écartement séparées (112, 114) .

15. Procédé selon la revendication 14, dans lequel le procédé comprend une fixation adhésive entre la cheville (100) et une paroi (123) du fond d'ancrage (119) délimitant le trou de mise en place (121) à la suite de la sortie, ainsi qu'une fixation mécanique de la cheville (100) dans le support d'ancrage (119) à la suite de l'écartement des nervures d'écartement (112, 114) contre la paroi (123) délimitant le trou de mise en place (121).
